(19) Europäisches Patentamt
European Patent Office
Office européen des brevets

(11) **EP 3 950 814 A1**

(12) **EUROPEAN PATENT APPLICATION**

(43) Date of publication:
**09.02.2022 Bulletin 2022/06**

(21) Application number: **21190016.2**

(22) Date of filing: **06.08.2021**

(51) International Patent Classification (IPC):
**C08L 9/06** (2006.01) **B60C 1/00** (2006.01)
**C08L 15/00** (2006.01) **C08C 19/02** (2006.01)

(52) Cooperative Patent Classification (CPC):
**C08L 9/06; B60C 1/0016; C08L 15/00;** C08C 19/02

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2020 JP 2020134785**

(71) Applicant: **Asahi Kasei Kabushiki Kaisha Tokyo 100-0006 (JP)**

(72) Inventors:
- **YASUMOTO, Atsushi Tokyo, 1000006 (JP)**
- **KIKUCHI, Akitomo Tokyo, 1000006 (JP)**

(74) Representative: **Strehl Schübel-Hopf & Partner Maximilianstrasse 54 80538 München (DE)**

(54) **CONJUGATED DIENE POLYMER COMPOSITION**

(57) An object of the present invention is to provide a conjugated diene polymer composition which can be prepared into a rubber compound product (such as a tire tread) ensuring a good balance between fuel efficiency and wet grip performance, and having high breaking properties, a small change in breaking strength after heating, and a small change in breaking properties for a prolonged vulcanization time, when vulcanized; and the conjugated diene polymer composition having a high compounding freedom which enables adjustment of the glass transition temperature.

The conjugated diene polymer composition comprises conjugated diene polymers (A) and (B) each having a specific amount of aromatic vinyl monomer units and a specific iodine value, wherein (SP value of (A) - SP value of (B)) is 0 $MPa^{1/2}$ or more and 0.8 $MPa^{1/2}$ or less, |iodine value of (A) - iodine value of (B)| is 100 I g/100 g or less, and |glass transition temperature of (A) - glass transition temperature of (B)| is 10°C or more and 60°C or less.

EP 3 950 814 A1

**Description**

BACKGROUND OF THE INVENTION

Field of the Invention

The present invention relates to a conjugated diene polymer composition.

Description of the Related Art

Accompanied by spread of autonomous driving techniques in the future, there has been a demand for a reduction in frequency of tire exchange, namely, an improvement in durability of tires. In particular, in order to ensure the safety of passengers, brake performance should be maintained for a longer time than in the related art.

To improve the durability of tires, the tires should have improved resistance to wear. For example, Japanese Patent No. 6004081 discloses a technique of improving resistance to wear of a tire by use of a tire tread comprising a hydrogenated conjugated diene rubber containing an ethylene structure.

In tread rubbers for eco-friendly tires, usually the balance between conflicting performances, for example, rolling resistance and brake performance or the balance between performance and cost is improved by use of different rubbers in combination. For example, Japanese Patent No. 6503064 discloses a rubber composition comprising a rubber containing a blend of a high molecular weight hydrogenated conjugated diene rubber and a low molecular weight hydrogenated conjugated diene rubber, the rubber composition providing high strength, lower fuel consumption, and high processability.

While the hydrogenated conjugated diene rubbers are used to improve the resistance to wear as disclosed in Japanese Patent Nos. 6004081 and 6503064, fuel efficiency and wet grip performance are naturally required in use thereof for tires.

However, hydrogenation of a conjugated diene polymer causes an undesirable change in glass transition temperature of the polymer, and is also likely to obstruct compatibility of the hydrogenated conjugated diene polymer with other polymers. There has been a demand for a conjugated diene polymer composition having a high compounding freedom to enable adjustment of the glass transition temperature of a compound product.

An object of the present invention is to solve the above problems, and to provide a conjugated diene polymer composition which can be prepared into a rubber compound product (such as a tire tread) which ensures a good balance between fuel efficiency and wet grip performance, and has high breaking properties, a small change in breaking strength after heating, and a small change in breaking properties for a prolonged vulcanization time, when vulcanized; the conjugated diene polymer composition having a high compounding freedom which enables adjustment of the glass transition temperature.

SUMMARY OF THE INVENTION

The present inventors have conducted extensive research in consideration of the above problems, and have found that the glass transition temperature of a composition containing two conjugated diene polymers having different glass transition temperatures can be controlled by designing the structure such that the absolute value of the difference between the glass transition temperatures thereof, the absolute value of the difference between the iodine values thereof, and the difference between the SP values thereof fall within predetermined ranges, and have completed the present invention.

In other words, the present invention relates to the following.

[1] A conjugated diene polymer composition, comprising:

a conjugated diene polymer (A) and a conjugated diene polymer (B),
wherein the conjugated diene polymer (A) has an aromatic vinyl monomer unit content of 5% by mass or more and 60% by mass or less, and has an iodine value of 5 to 200 I g/100 g,
the conjugated diene polymer (B) has an aromatic vinyl monomer unit content of 0% by mass or more and 50% by mass or less, and has an iodine value of 5 to 200 I g/100 g,
the difference obtained by subtracting an SP value ($MPa^{1/2}$) of the conjugated diene polymer (B) from an SP value ($MPa^{1/2}$) of the conjugated diene polymer (A), (SP value of (A) - SP value of (B)), is 0 $MPa^{1/2}$ or more and 0.8 $MPa^{1/2}$ or less,
the absolute value of the difference between the iodine value of the conjugated diene polymer (A) and that of the conjugated diene polymer (B), (|iodine value of (A) - iodine value of (B)|), is 100 I g/100 g or less, and

the absolute value of the difference between the glass transition temperature of the conjugated diene polymer (A) and that of the conjugated diene polymer (B), (|glass transition temperature of (A) - glass transition temperature of (B)|), is 10°C or more and 60°C or less.

[2] The conjugated diene polymer composition according to [1], wherein the conjugated diene polymer (A) has a weight average molecular weight of 230000 or more and less than 1000000.

[3] The conjugated diene polymer composition according to [1] or [2], wherein the conjugated diene polymer (B) has a weight average molecular weight of 230000 or more and less than 1000000.

[4] The conjugated diene polymer composition according to any of [1] to [3], wherein a mass ratio of the conjugated diene polymer (A) to the conjugated diene polymer (B), (mass of (A):mass of (B)), is 20:80 to 80:20.

[5] The conjugated diene polymer composition according to any of [1] to [4], wherein a modification rate of the conjugated diene polymer (A) and that of the conjugated diene polymer (B) are 60% or more.

[6] The conjugated diene polymer composition according to any of [1] to [5], wherein the absolute value of the difference between the iodine value of the conjugated diene polymer (A) and that of the conjugated diene polymer (B), (|iodine value of (A) - iodine value of (B)|), is less than 80 I g/100 g.

[7] The conjugated diene polymer composition according to any of [1] to [6], wherein the difference between a content of an aromatic vinyl monomer unit contained in the conjugated diene polymer (A) and a content of an aromatic vinyl monomer unit contained in the conjugated diene polymer (B), (content of aromatic vinyl monomer unit contained in (A) - content of aromatic vinyl monomer unit contained in (B)), is 5% by mass or more and 30% by mass or less.

[8] The conjugated diene polymer composition according to any of [1] to [7], wherein one peak top derived from glass transition derived from the conjugated diene polymer is present in a DSC differential curve obtained by DSC measurement of the conjugated diene polymer composition.

[9] The conjugated diene polymer composition according to any of [1] to [8], wherein the glass transition temperature of the conjugated diene polymer composition measured by DSC is -65 to -15°C.

[10] A pneumatic tire comprising the conjugated diene polymer composition according to any of [1] to [9], a plasticizer component, and a filler component.

[11] A method of producing a conjugated diene polymer composition, comprising:

examining, in a conjugated diene polymer comprising a conjugated diene monomer and an aromatic vinyl monomer,
a change in glass transition temperature caused by a vinyl bond content and/or the aromatic vinyl monomer content and
a change in glass transition temperature caused by an iodine value;
selecting a pair of a conjugated diene polymer (A) and a conjugated diene polymer (B) based on these changes such that the difference between an SP values ($MPa^{1/2}$) thereof is 0 $MPa^{1/2}$ or more and 0.8 $MPa^{1/2}$ and the absolute value of the difference between the glass transition temperatures thereof is 10°C or more and less than 80°C; and
mixing the conjugated diene polymer (A) and the conjugated diene polymer (B) which are selected.

The present invention can provide a conjugated diene polymer composition which can be prepared into a rubber compound product (such as a tire tread) which ensures a good balance between fuel efficiency and wet grip performance, and has high breaking properties, a small change in breaking strength after heating, and a small change in breaking properties for a prolonged vulcanization time, when vulcanized; the conjugated diene polymer composition having a high compounding freedom which enables adjustment of the glass transition temperature.

DETAILED DESCRIPTION OF THE PREFERRED EMBODIMENT

An embodiment for implementing the present invention (hereinafter, referred to as "the present embodiment") will now be described in detail.

To be noted, the present embodiment shown below is illustrative for describing the present invention, and should not be construed as limitations to the present invention. The present invention can be appropriately modified and implemented without departing from the gist of the present invention.

[Conjugated diene polymer composition]

The conjugated diene polymer composition according to the present embodiment comprises a conjugated diene polymer (A) and a conjugated diene polymer (B):

the conjugated diene polymer (A) has an aromatic vinyl monomer unit content of 5% by mass or more and 60% by mass or less, and has an iodine value of 5 to 200 I g/100 g;

the conjugated diene polymer (B) has an aromatic vinyl monomer unit content of 0% by mass or more and 50% by mass or less, and has an iodine value of 5 to 200 I g/100 g;

the difference obtained by subtracting an SP value ($MPa^{1/2}$) of the conjugated diene polymer (B) from an SP value ($MPa^{1/2}$) of the conjugated diene polymer (A), (SP value of (A) - SP value of (B)), is 0 $MPa^{1/2}$ or more and 0.8 $MPa^{1/2}$ or less;

the absolute value of the difference between the iodine value of the conjugated diene polymer (A) and that of the conjugated diene polymer (B), (|iodine value of (A) - iodine value of (B)|), is 100 I g/100 g or less;

the absolute value of the difference between the glass transition temperature of the conjugated diene polymer (A) and that of the conjugated diene polymer (B), (|glass transition temperature of (A) - glass transition temperature of (B)|), is 10°C or more and 60°C or less.

The conjugated diene polymer composition according to the present embodiment having such features can be prepared into a rubber compound product (such as a tire tread) which ensures a good balance between fuel efficiency and wet grip performance, and has high breaking properties, a small change in breaking strength after heating, and a small change in breaking properties for a prolonged vulcanization time, when vulcanized. The conjugated diene polymer composition according to the present embodiment also demonstrates a high compounding freedom which enables adjustment of the glass transition temperature as its effect.

The conjugated diene polymer composition according to the present embodiment comprises the conjugated diene polymer (A) and the conjugated diene polymer (B).

The conjugated diene polymer (A) and the conjugated diene polymer (B) used in the present embodiment each are preferably a random copolymer containing constitutional units based on an aromatic vinyl monomer (hereinafter, also referred to as "aromatic vinyl monomer units"), constitutional units based on a conjugated diene monomer (hereinafter, also referred to as "conjugated diene monomer units"), and constitutional units based on ethylene (hereinafter, also referred as "ethylene units").

In this specification, the term "random copolymer" indicates a copolymer having a long chain proportion of 10% by mass or less in the total structural units derived from an aromatic vinyl compound, where the long chain proportion indicates the proportion of chains each composed of continuous 8 or more structural units derived from the aromatic vinyl compound. A long chain proportion of 10% by mass or less is likely to provide lower fuel consumption.

Here, the content of chains composed of continuous 8 or more structural units derived from the aromatic vinyl compound can be calculated based on the proportion of the integrated value in the range (A) to the total of integrated values in the chemical shift ranges (A) to (c) below in a $^1$H-NMR spectrum obtained from measurement of a first polymer using deuterochloroform as a solvent. For example, if the aromatic vinyl compound is styrene, the proportion of the integrated value in the range (A) in the total integrated values in the ranges (A) to (c) is determined, and the value is multiplied by 2.5 to calculate the proportion of styrene. Thereby, the states of chains composed of the structural units derived from the aromatic vinyl compound can be known.

(A) 8 or more chains of the aromatic vinyl compound: $6.00 \leq S < 6.68$
(B) 2 to 7 chains of the aromatic vinyl compound: $6.68 \leq S < 6.89$
(C) short chains of the aromatic vinyl compound: $6.89 \leq S \leq 8.00$

Although the conjugated diene polymer (A) and the conjugated diene polymer (B) used in the present embodiment each are the random copolymer having constitutional units based on an aromatic vinyl compound, constitutional units based on a conjugated diene compound, and constitutional units based on ethylene, preferably a hydrogenated copolymer prepared by adding hydrogen to a copolymer having aromatic moieties as the constitutional units based on an aromatic vinyl compound and conjugated diene moieties as the constitutional units based on conjugated diene compound from the viewpoint of commercial production, the conjugated diene polymer (A) and the conjugated diene polymer (B) used in the present embodiment each may be a random copolymer prepared through copolymerization of an aromatic vinyl compound, a conjugated diene compound, and ethylene. In the hydrogenated copolymer, part or all of the conjugated diene moieties are converted into ethylene moieties by adding hydrogen to double bonds of the conjugated diene moieties. The content of the ethylene moieties can be increased by increasing the hydrogenation rate.

In the hydrogenated copolymer, both terminals of the main chain of the conjugated diene compound which form polymer chains (for example, the 1,4-bond of the polymer prepared from 1,3-butadiene as a monomer) to which hydrogen is added are defined as an ethylene moiety, and other forms (for example, 1,2-bond (vinyl bond) of the polymer prepared from 1,3-butadiene as a monomer) to which hydrogen is added are not included in the ethylene moiety.

Examples of the aromatic vinyl compound include, but not particularly limited to, styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene.

These may be used singly or in combinations of two or more thereof. Among these, styrene is particularly preferred because of practical aspects such as availability of the monomer.

Examples of the conjugated diene compound include, but not particularly limited to, 1,3-butadiene, isoprene, 1,3-pentadiene, 2,3-dimethylbutadiene, 2-phenyl-1,3-butadiene, and 1,3-hexadiene. These may be used singly or in combinations of two or more thereof. Among these, 1,3-butadiene and isoprene are preferred, and 1,3-butadiene is more preferred because of practical aspects such as availability of the monomer.

(Conjugated diene polymer (A))

To improve the breaking properties and adjust the glass transition temperature of the compound product, the content of the aromatic vinyl monomer units in the conjugated diene polymer (A) is 5% by mass or more, preferably 10% by mass or more, more preferably 15% by mass or more, particularly preferably 20% by mass or more. From the viewpoint of the fuel efficiency, the content of the aromatic vinyl monomer units in the conjugated diene polymer (A) is 60% by mass or less, preferably 55% by mass or less, more preferably 40% by mass or less, particularly preferably 45% by mass or less.

Although not particularly limited, the content of the aromatic vinyl monomer units can be measured by a method such as NMR, and can be measured by the method described later in Examples.

From the viewpoint of easiness in vulcanization and the vulcanization density, the conjugated diene polymer (A) has an iodine value of 5 I g/100 g or more, preferably 7 I g/100 g or more, more preferably 9 I g/100 g or more. From the viewpoint of the heat resistance and the weatherability, the conjugated diene polymer (A) has an iodine value of 200 I g/100 g or less, preferably 180 I g/100 g or less, more preferably 150 I g/100 g or less, particularly preferably 130 I g/100 g or less.

The iodine value of the conjugated diene polymer is an index indicating the double bond content in the conjugated diene polymer, and can be controlled by the content of a conjugated diene compound or by the hydrogenation rate if a conjugated diene polymer is prepared by hydrogenation.

The iodine value of the conjugated diene polymer is calculated by the method described later in Examples.

From the viewpoint of the cross-linkability, the hydrogenation rate of the conjugated diene polymer (A) (proportion of hydrogenated moieties in the conjugated diene moieties) is preferably 50 mol% or more, more preferably 60 mol% or more, still more preferably 70 mol% or more. From the viewpoint of the cross-linkability, the hydrogenation rate is preferably 98 mol% or less, more preferably 95 mol% or less, particularly preferably less than 90 mol%.

The hydrogenation rate of the conjugated diene polymer can be controlled by the hydrogen content and the reaction time during the hydrogenation reaction, and can be calculated from the spectrum reduction rate of unsaturated bonds in the spectrum obtained from measurement by $^1$H-NMR.

For example, from the viewpoint of the balance among the fuel efficiency, the wet grip performance, and the breaking properties of the resulting tire, the conjugated diene polymer (A) has a glass transition temperature of preferably -85°C or more and -5°C or less, more preferably -75°C or more and -10°C or less, still more preferably -65°C or more and -10°C or less.

The glass transition temperature (Tg) of the conjugated diene polymer is controlled by the compositional ratio of the aromatic vinyl compound to the conjugated diene compound or the iodine value, for example.

The glass transition temperature of the conjugated diene polymer can be measured by the method described later in Examples.

From the viewpoint of the compatibility of the conjugated diene polymer, the conjugated diene polymer (A) preferably has a solubility parameter (hereinafter, also referred to as "SP value") of 16.8 or more and 18.5 or less. From the viewpoint of the wet grip performance of the tire, the SP value of the conjugated diene polymer (A) is preferably 17.0 or more, more preferably 17.1 or more. From the viewpoint of the fuel efficiency of the tire, the SP value of the conjugated diene polymer (A) is preferably 18.4 or less, more preferably 18.2 or less, particularly preferably 18.0 or less.

The solubility parameter (SP value) of the conjugated diene polymer is controlled by the compositional ratio of the aromatic vinyl compound to the conjugated diene compound or the iodine value, for example. Although a specific method of controlling the SP value is not particularly limited, for example, the SP value can be increased by increasing the compositional ratio of the aromatic vinyl compound. Alternatively, the SP value can be increased by increasing the iodine value.

The solubility parameter (SP value) of the conjugated diene polymer is calculated by the method described later in Examples.

In the method of calculating the SP value of the conjugated diene polymer, first, the molar volume and the cohesive energy of each vinyl polymer is calculated by the Bicerano's method (literature: J. Bicerano, Prediction of Polymer Properties, 3rd, Marcel Dekker, 2002). For the cohesive energy, the value calculated according to the Van Krevelen method is used.

In the next step, the SP value of the conjugated diene polymer can be determined by the method described from the expressions 17.8 to 17.10 shown in p. 615 of Jozef. Bicerano: PREDICTION OF POLYMER PROPERTIES, Marcel Dekker, AMERICA (2002). To be noted, crystallinity or the micro phase separation structure of the block copolymer or the like is neglected.

The exemplary cohesive energy E (J/mol)/molar volume V ($10^{-6}$ m$^3$/mol) of each vinyl polymer will be shown below:

polystyrene: 36932/97.0, 1,2-polybutadiene: 16450/58.3, 1,4-polybutadiene: 18579/59.1, 1,2-polybutylene: 17527/65.6, hydrogenated 1,4-polybutadiene: 18146/64.4, 1,4-polyisoprene: 22644/76.6, 1,2-polyisoprene: 19407/75.3, 3,4-polyisoprene: 20908/82.2, polyethylene: 9073/32.2.

For example, the method of calculating the SP value for a conjugated diene polymer composed of equivalent moles of styrene/1,4-butadiene will be shown below:

$$E = 36932 \times 0.5 + 18579 \times 0.5 = 27755 \ (J/mol)$$

$$V = 97.0 \times 0.5 + 59.1 \times 0.5 = 78.1 \ (m^3/mol)$$

$$SP \ value = (27755/78.1)1/2 = 18.6 \ ((J/cm^3)^{1/2})$$

From the viewpoint of veil moldability and cold flow properties during production, the conjugated diene polymer (A) preferably has a weight average molecular weight of 230000 or more and less than 1000000. From the viewpoint of adhesion and breaking properties during production, the conjugated diene polymer (A) has a weight average molecular weight of more preferably 250000 or more, still more preferably 270000 or more, particularly preferably 300000 or more. On the other hand, from the viewpoint of veil moldability during production, the conjugated diene polymer (A) has a weight average molecular weight of more preferably 900000 or less, still more preferably 800000 or less.

The weight average molecular weight of the conjugated diene polymer can be measured by gel permeation chromatography (GPC) or the like, and can be measured by the method described later in Examples.

From the viewpoint of processability, the conjugated diene polymer (A) has a molecular weight distribution (Mw/Mn) of preferably 1.1 or more, more preferably 1.2 or more, still more preferably 1.3 or more. From the viewpoint of low fuel consumption, the conjugated diene polymer (A) has a molecular weight distribution (Mw/Mn) of preferably 3.0 or less, more preferably 2.5 or less.

To facilitate kneading in preparation of a compound product for a tire and prevent tear off of the kneaded dough, the conjugated diene polymer (A) has a Mooney viscosity at 100°C of preferably 250 or less, more preferably 200 or less, still more preferably 180 or less. On the other hand, to prevent adhesion during production, the conjugated diene polymer (A) has a Mooney viscosity at 100°C of preferably 20 or more, more preferably 30 or more, still more preferably 40 or more.

Although not particularly limited in the present embodiment, the Mooney viscosity can be measured using a Mooney viscometer by a method using an L-shaped rotor according to ISO 289, for example.

(Conjugated diene polymer (B))

From the viewpoint of low temperature properties and adjustment of the glass transition temperature of the compound product, the content of aromatic vinyl monomer units in the conjugated diene polymer (B) used in the present embodiment is 0% by mass or more, preferably 3% by mass or more, more preferably 5% by mass or more, particularly preferably 8% by mass or more. From the viewpoint of wet grip performance, the content of the aromatic vinyl monomer units in the conjugated diene polymer (B) is 50% by mass or less, preferably 40% by mass or less, more preferably 35% by mass or less, particularly preferably 30% by mass or less.

From the viewpoint of easiness of vulcanization and the vulcanization density, the conjugated diene polymer (B) has an iodine value of 5 I g/100 g or more, preferably 7 I g/100 g or more, more preferably 9 I g/100 g or more. From the viewpoint of heat resistance and weatherability, the conjugated diene polymer (B) has an iodine value of 200 I g/100 g or less, preferably 180 I g/100 g or less, more preferably 150 I g/100 g or less, particularly preferably 130 I g/100 g or less. The expression "high heat resistance" indicates that a reduction in breaking properties or wet grip performance is small when the conjugated diene polymer composition and the tire comprising the conjugated diene polymer composition is heated under the atmosphere, for example.

From the viewpoint of the cross-linkability, the hydrogenation rate (proportion of hydrogenated moieties in the conjugated diene moieties) of the conjugated diene polymer (B) is preferably 50 mol% or more, more preferably 60 mol% or more, still more preferably 70 mol% or more. From the viewpoint of the cross-linkability, the hydrogenation rate of the conjugated diene polymer (B) is preferably 98 mol% or less, more preferably 95 mol% or less, particularly preferably less than 90 mol%.

From the viewpoint of the balance among the fuel efficiency, the wet grip performance, and the breaking properties of the resulting tire, the conjugated diene polymer (B) has a glass transition temperature of preferably -100°C or more and -15°C or less, more preferably -95°C or more and -20°C or less, still more preferably -95°C or more and -30°C or less.

From the viewpoint of the compatibility of the conjugated diene polymer, the conjugated diene polymer (B) preferably has a solubility parameter (SP value) of 16.4 or more and 18.2 or less. From the viewpoint of the wet grip performance of the tire, the SP value of the conjugated diene polymer (B) is more preferably 16.6 or more, still more preferably 16.8 or more. From the viewpoint of the fuel efficiency of the tire, the solubility parameter (SP value) of the conjugated diene polymer (B) is preferably 18.0 or less, more preferably 17.8 or less, particularly preferably 17.7 or less.

From the viewpoint of the veil moldability and the cold flow properties during production, the conjugated diene polymer (B) preferably has a weight average molecular weight of 230000 or more and less than 1000000. From the viewpoint of the adhesion and the breaking properties during production, the conjugated diene polymer (B) has a weight average molecular weight of more preferably 250000 or more, still more preferably 270000 or more, particularly preferably 300000 or more. On the other hand, from the viewpoint of the veil moldability during production, the conjugated diene polymer (B) has a weight average molecular weight of more preferably 900000 or less, still more preferably 800000 or less.

From the viewpoint of processability, the conjugated diene polymer (B) has a molecular weight distribution (Mw/Mn) of preferably 1.1 or more, more preferably 1.2 or more, still more preferably 1.3 or more. From the viewpoint of low fuel consumption, the conjugated diene polymer (B) has a molecular weight distribution (Mw/Mn) of preferably 3.0 or less, more preferably 2.5 or less.

To facilitate kneading in preparation of a compound product for a tire and prevent tear off of the kneaded dough, the conjugated diene polymer (B) has a Mooney viscosity at 100°C of preferably 250 or less, more preferably 200 or less, still more preferably 180 or less. On the other hand, to prevent adhesion during production, the conjugated diene polymer (B) has a Mooney viscosity at 100°C of preferably 20 or more, more preferably 30 or more, still more preferably 40 or more.

(Glass transition temperature)

The glass transition temperatures of the conjugated diene polymer (A) and the conjugated diene polymer (B) before the hydrogenation reaction can be controlled by the aromatic vinyl monomer content or the 1,2-vinyl bond content, for example.

A larger aromatic vinyl monomer content or 1,2-vinyl bond content is likely to result in a conjugated diene polymer having a higher glass transition temperature. The glass transition temperature of the conjugated diene polymer can be controlled by the hydrogenation rate or the iodine value. A higher hydrogenation rate or higher iodine value of the conjugated diene polymer is likely to result in a higher glass transition temperature. To be noted, such a tendency is significantly affected by the glass transition temperature of the conjugated diene polymer before hydrogenation.

(Selection of conjugated diene polymer (A) and conjugated diene polymer (B))

To obtain a conjugated diene polymer composition according to the present embodiment in which the difference between the SP values, the absolute value of the difference between the iodine values, and the absolute value of the difference between the glass transition temperatures are controlled to fall within the ranges specified above, as an exemplary method, the conjugated diene polymer (A) and the conjugated diene polymer (B) are selected as below.

Prior to selection of the conjugated diene polymer (A) and the conjugated diene polymer (B), first, preferred is examination of how the glass transition temperature vary according to the vinyl bond content, the aromatic vinyl monomer content, and the iodine value. Specifically, (1) the glass transition temperatures of conjugated diene polymers are measured by varying the vinyl bond content and the iodine value while the aromatic vinyl monomer content is fixed. Preferably, the measurement is performed with 3 or more levels of aromatic vinyl monomer content. (2) The glass transition temperatures of conjugated diene polymers are measured by varying the aromatic vinyl monomer content and the iodine value while the vinyl bond content is fixed. The measurement is preferably performed with 3 or more levels of vinyl bond content. Although the measurements (1) and (2) may be performed in any order, influences of the vinyl bond content, the aromatic vinyl monomer content, and the iodine value over the glass transition temperature can be understood from the data thus collected in the two manners described above. Thus, the conjugated diene polymer (A) and conjugated diene polymer (B) can be selected such that the absolute value of the difference between the glass transition temperatures (|glass transition temperature of (A) - glass transition temperature of (B)|) falls within the range specified above. Although the difference between the SP value of the conjugated diene polymer (A) and that of the conjugated diene polymer (B) should be adjusted, the conjugated diene polymer (A) and conjugated diene polymer (B) are selected without problem based on the information of the glass transition temperatures obtained from the measurements (1) and (2) because the SP value can be calculated from the structure if known.

The present inventors have found the following tendency as a result of examination on the influences over the glass transition temperature. A larger aromatic vinyl monomer content or 1,2-vinyl bond content is likely to result in a conjugated diene polymer having a higher glass transition temperature. The glass transition temperature of the conjugated diene polymer can also be controlled by the hydrogenation rate or the iodine value, for example. In the conjugated diene polymer, a higher hydrogenation rate results in a lower iodine value. The 1,2-vinyl bond is preferentially hydrogenated to the 1,4-cis bond and 1,4-trans bond in a hydrogenation reaction of a conjugated diene polymer in the presence of a titanocene catalyst. For this reason, the glass transition temperature of the hydrogenated region where the 1,2-vinyl bond is hydrogenated is reduced from that of the conjugated diene polymer before hydrogenation. A higher hydrogenation rate of the 1,4-cis bond and the 1,4-trans bond in the conjugated diene polymer results in a higher glass transition temperature. To be noted, such a tendency is significantly affected by the glass transition temperature of the conjugated diene polymer before hydrogenation. The glass transition temperature of the non-hydrogenated polymer (conjugated diene polymer before hydrogenation) is determined by the aromatic vinyl monomer content and the vinyl bond content, and is more significantly affected by the aromatic vinyl monomer content. The conjugated diene polymer containing an ethylene structure (including the hydrogenated polymer) is more significantly affected by the vinyl bond content and the iodine value, and a lower vinyl bond content more significantly increases the glass transition temperature of the conjugated diene polymer after hydrogenation.

The absolute value of the difference between the iodine value of the conjugated diene polymer (A) and that of the iodine value of the conjugated diene polymer (B), (|iodine value of (A) - iodine value of (B)|), is 100 I g/100 g or less, preferably 90 I g/100 g or less, more preferably 80 I g/100 g or less, still more preferably less than 80 I g/100 g because the breaking properties can be improved by higher uniformity of the vulcanization density when vulcanized or a reduction width of physical properties for a prolonged vulcanization time can be decreased. Although not particularly limited, the lower limit of the absolute value of the difference between the iodine value of the conjugated diene polymer (A) and that of the iodine value of the conjugated diene polymer (B), (|iodine value of (A) - iodine value of (B)|), is 0 I g/100 g or more, for example.

From the viewpoint of the compatibility, the fuel efficiency, and the resistance to wear, the difference obtained by subtracting the SP value of the conjugated diene polymer (B) from the SP value of the conjugated diene polymer (A), (SP value of (A) - SP value of (B)), is $0.80$ MPa$^{1/2}$ or less, preferably $0.70$ MPa$^{1/2}$ or less, more preferably $0.65$ MPa$^{1/2}$ or less, still more preferably $0.60$ MPa$^{1/2}$ or less, particularly preferably $0.50$ MPa$^{1/2}$ or less. The lower limit of the difference obtained by subtracting the SP value of the conjugated diene polymer (B) from the SP value of the conjugated diene polymer (A), (SP value of (A) - SP value of (B)), is $0$ MPa$^{1/2}$ or more, for example.

From the viewpoint of the compounding freedom in preparation of a compound product for a tire and the balance between the fuel efficiency and the wet grip performance, the absolute value of the difference between the glass transition temperature of the conjugated diene polymer (A) and that of the glass transition temperature of the conjugated diene polymer (B), (|glass transition temperature of (A) - glass transition temperature of (B)|), is 10°C or more, preferably 15°C or more, more preferably 20°C or more. From the viewpoint of the compatibility of the rubber, the absolute value of the difference of the glass transition temperature of the conjugated diene polymer (A) and the glass transition temperature of the conjugated diene polymer (B), (|glass transition temperature of (A) - glass transition temperature of (B)|), is 60°C or less, preferably 50°C or less, more preferably 45°C or less.

(Glass transition temperature of conjugated diene polymer composition)

The conjugated diene polymer composition according to the present embodiment preferably has one glass transition temperature. That the conjugated diene polymer composition has one glass transition temperature is determined by DSC measurement of the conjugated diene polymer composition in which one peak top (one inflection point) derived from glass transition of the conjugated diene polymer is observed in the DSC differential curve. A broad peak having one inflection point is considered as the aspect in which the conjugated diene polymer composition has one glass transition temperature, while the presence of a shoulder having two or more inflection points is not included in the aspect in which the conjugated diene polymer composition has one glass transition temperature. The conjugated diene polymer (A) and the conjugated diene polymer (B) are preferably compatibilized. From the viewpoint of the wet grip performance, the conjugated diene polymer composition according to the present embodiment has a glass transition temperature of preferably -65°C or more, more preferably -60°C or more, still more preferably -55°C or more. From the viewpoint of the fuel efficiency and the low temperature properties, the conjugated diene polymer composition according to the present embodiment has a glass transition temperature of preferably -10°C or less, more preferably -13°C or less, still more preferably - 15°C or less.

Compatibilization of the conjugated diene polymer (A) and the conjugated diene polymer (B) is preferred to facilitate the control of the glass transition temperature of the conjugated diene polymer composition according to the present embodiment, and is further preferred to reduce the interface between the conjugated diene polymer (A) and the conjugated diene polymer (B) and provide high fuel efficiency.

(Ratio of conjugated diene polymer (A) to conjugated diene polymer (B))

To control the hardness of the compound product and the glass transition temperature of the conjugated diene polymer composition according to the present embodiment comprising the conjugated diene polymer (A) and the conjugated diene polymer (B), the mass ratio of the conjugated diene polymer (A) to the conjugated diene polymer (B) (mass of (A):mass of (B)) is preferably 20:80 to 80:20, more preferably 25:75 to 75:25, still more preferably 30:70 to 70:30. Although the glass transition temperature of the conjugated diene polymer composition according to the present embodiment can be controlled by varying the glass transition temperatures of the polymers themselves according to the polymer structures of the conjugated diene polymer (A) and the conjugated diene polymer (B), the glass transition temperature can also be controlled to some extent by the mixing ratio thereof. Although whether the glass transition temperature of the conjugated diene polymer composition according to the present embodiment is controlled by the polymer structures or the ratio depends on the balance between physical properties required for the compound product, control of the glass transition temperature by varying the ratio of the polymers having the known structures is more efficient and preferred because a large number of compounding conditions can be examined using the products having the same structures.

If the conjugated diene polymer composition according to the present embodiment is used in a tire, the hardness is usually adjusted to about 60 to 70. It is a preferred aspect that the compounding ratio be set in consideration of the hardness when mixed, besides the difference between the SP value of the conjugated diene polymer (A) and that of the conjugated diene polymer (B) and the glass transition temperatures thereof.

(Difference in contents of aromatic vinyl monomer units)

In the conjugated diene polymer composition according to the present embodiment, the difference between the content of aromatic vinyl monomer units contained in the conjugated diene polymer (A) and that of aromatic vinyl monomer units contained in the conjugated diene polymer (B), (content of aromatic vinyl monomer units contained in (A) - content of aromatic vinyl monomer units contained in (B)), is preferably 5% by mass or more and 30% by mass or less, more preferably 8% by mass or more and 30% by mass or less, still more preferably 10% by mass or more and 28% by mass or less. If the difference between the content of aromatic vinyl monomer units contained in the conjugated diene polymer (A) and that of aromatic vinyl monomer units contained in the conjugated diene polymer (B) in the conjugated diene polymer composition according to the present embodiment falls within the range above, a good balance between the fuel efficiency and the handling stability is likely to be provided.

(Method of producing conjugated diene polymer)

(Polymerization method)

Any method of polymerizing the conjugated diene polymer can be used in the present embodiment without limitation as long as the predetermined physical properties described above are obtained. Although any one of solution polymerization, gaseous phase polymerization, and bulk polymerization can be used, solution polymerization is particularly preferred from the viewpoint of commercial production. Moreover, polymerization may be performed in any one of a batch method and a continuous method.

If solution polymerization is used, the monomer content in the solution is preferably 5% by mass or more, more preferably 10% by mass or more. If the monomer content in the solution is 5% by mass or more, a sufficient amount of conjugated diene polymer is likely to be obtained, reducing the cost. The monomer content in the solution is also preferably 50% by mass or less, more preferably 30% by mass or less. If the monomer content in the solution is 50% by mass or less, the viscosity of the solution is likely to reduce, facilitating stirring and thus polymerization.

(Polymerization initiator)

If anionic polymerization is performed, an organic lithium compound is preferably used as a polymerization initiator, although not particularly limited. Preferred organic lithium compounds are those having alkyl groups having 2 to 20 carbon atoms. Examples thereof include ethyllithium, n-propyllithium, isopropyllithium, n-butyllithium, sec-butyllithium, tert-butyllithium, tert-octyllithium, n-decyllithium, phenyllithium, 2-naphthyllithium, 2-butyl-phenyllithium, 4-phenyl-butyllithium, cyclohexyllithium, cyclopentyllithium, and a reaction product of diisopropenylbenzene with butyllithium. Among these, preferred is n-butyllithium or sec-butyllithium from the viewpoint of availability and safety.

If coordination polymerization is performed, the polymerization initiator to be used is preferably the polymerization catalyst composition according to Japanese Patent Application Laid-Open No. 2020-45500.

(Polymerization method)

The method of producing the conjugated diene polymer by anionic polymerization or coordination polymerization in the presence of the polymerization initiator can be any method, and a conventionally known method can be used. Specifically, the target conjugated diene polymer can be prepared by polymerizing styrene, 1,3-butadiene, ethylene, or the like in inactive organic solvent to the reaction, such as a hydrocarbon solvent such as an aliphatic, alicyclic, or aromatic hydrocarbon compound, using butyl lithium as the polymerization initiator in the presence of an optional randomizer.

(Hydrocarbon solvent)

Preferred hydrocarbon solvents are those having 3 to 8 carbon atoms. Examples thereof include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These may be used singly or in combinations of two or more thereof.

(Randomizer in anionic polymerization)

The term "randomizer" indicates a compound which has action to control the microstructure of the conjugated diene moiety in the conjugated diene polymer (for example, to increase the 1,2-bond in butadiene and the 3,4-bond in isoprene) or to control the compositional distribution of monomer units in the copolymer (for example, to randomize styrene units and butadiene units in the styrenebutadiene copolymer). The randomizer can be used without limitation, and any one of known compounds usually used as a randomizer in the related art can be used. Examples thereof include ethers and tertiary amines such as dimethoxybenzene, tetrahydrofuran, dimethoxyethane, diethylene glycol dibutyl ether, diethylene glycol dimethyl ether, 2,2-di(2-tetrahydrofuryl)propane, triethylamine, pyridine, N-methylmorpholine, N,N,N',N'-tetramethylethylenediamine, and 1,2-dipiperidinoethane. Potassium salts such as potassium t-amylate and potassium t-butoxide and sodium salts such as sodium t-amylate can also be used. These randomizers may be used singly or in combinations of two or more thereof. The amount of the randomizer to be used is preferably 0.01 molar equivalent or more, more preferably 0.05 molar equivalent or more per 1 mol of an organic lithium compound. If the amount of the randomizer to be used is less than 0.01 molar equivalent, the effect of addition is small, tending to obstruct randomization. The amount of the randomizer to be used is also preferably 1000 molar equivalent or less, more preferably 500 molar equivalent or less per 1 mole of an organic lithium compound. If the amount of the randomizer to be used is more than 1000 molar equivalent, the reaction rate of the monomer significantly changes, conversely tending to obstruct randomization.

(Reaction temperature)

Although the reaction temperature for polymerization is not particularly limited as long as the reaction suitably progresses, the reaction temperature is usually -10°C to 100°C, more preferably 25°C to 70°C.

(Modification step)

A functional group interactive with silica can be introduced into the polymerization ending terminal of the conjugated diene polymer by a step of reacting an active terminal of the conjugated diene polymer prepared through the polymerization step with a compound having the functional group interactive with silica. A conjugated diene polymer having a modified polymerization ending terminal is thereby prepared. In this specification, the term "terminal" indicates a moiety present at an end of the chain excluding the structure derived from a monomer having the carbon-carbon double bond. Although coupling of the polymerization ending terminal causes the ending terminal of the resulting conjugated diene polymer to be star-branched and thus be no longer the so-called terminal, the step is described on the premise that the star-branch point is on the polymerization ending terminal side in the polymerization step.

The conjugated diene polymer to be used in the modification reaction (hereinafter, also referred to as terminal modification reaction) may be that having an unmodified polymerization starting terminal or may be that having a modified polymerization starting terminal, as long as the conjugated diene polymer has an active terminal. The compound having a functional group to be introduced into the polymerization ending terminal of the conjugated diene polymer can be any compound as long as it has a functional group interactive with silica and can be reactive with the polymerization active terminal. As the introduction method, preferred are methods of introducing the functional group in the presence of a terminal modifier containing a tin or nitrogen atom, and more preferred is a method of introducing the functional group in the presence of a terminal modifier containing a nitrogen atom. Although the method of measuring the modification rate described later is a method for modification with nitrogen, a method of measuring the modification rate suitable for modification with tin may be used in the case of modification with tin.

Preferred as the terminal modifier containing a nitrogen atom are isocyanate compounds, isothiocyanate compounds, isocyanuric acid derivatives, nitrogen group-containing carbonyl compounds, nitrogen group-containing vinyl compounds, nitrogen group-containing epoxy compounds, and nitrogen group-containing alkoxysilane compounds for their polymerization productivity and high modification rate.

Among these terminal modifiers containing a nitrogen atom, more preferred are nitrogen group-containing alkoxysilane compounds because of their polymerization productivity, high modification rate, and tensile strength in production of tires.

Preferred examples of the nitrogen atom-containing group alkoxysilane compounds include 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy,2-methyl-1-(3-trimethoxysilylpropyl)-1-aza-2-silacyclopentane, 2-ethoxy,2-ethyl-1-(3-triethoxysilylpropyl)-1-aza-2-silacyclopentane, 2-methoxy,2-methyl-1-(3-dimethoxymethylsilylpropyl)-1-aza-2-silacyclopentane, 2-ethoxy,2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and N1-(3-(bis(3-(trimethoxysilyl)propyl)amino)propyl)-N1-methyl-N3-(3-(methyl(3-(trimethoxysilyl)propyl)amino)propyl)-N3-(3-(trimethoxysilyl)propyl)-1,3-propanediamine.

The terminal modification reaction can be performed as a solution reaction, for example. The solution reaction may be performed using a solution containing unreacted monomers after the polymerization reaction is completed in the polymerization step, or may be performed after the copolymer contained in the solution is isolated and dissolved in an appropriate solvent such as cyclohexane. The terminal modification reaction may be performed in batch or in a continuous method. At this time, the terminal modifier can be added by any method. Examples thereof include a method of adding the terminal modifier in batch, a method of adding portions of the terminal modifier, and a method of continuously adding the terminal modifier.

The amount of the compound used in the terminal modification reaction may be appropriately set according to the type of compound used in the reaction. The amount thereof is preferably 0.1 molar equivalent or more, more preferably 0.3 molar equivalent or more based on the metal atom contained in the polymerization initiator and involved in the polymerization reaction. Control of the amount of the compound used in the terminal modification reaction to 0.1 molar equivalent or more can sufficiently progress the modification reaction to suitably improve the dispersibility of silica.

The temperature for the terminal modification reaction is usually the same as that for the polymerization reaction, preferably -20 to 150°C, more preferably 0 to 120°C, particularly preferably 20 to 100°C. A low temperature for the modification reaction will result in increased viscosity of the modified copolymer.

In contrast, a higher temperature for the modification reaction is likely to deactivate the polymerization active terminal. The reaction time of the modification reaction is preferably 1 minute to 5 hours, more preferably 2 minutes to 1 hour.

(Modification rate of conjugated diene polymer composition)

The modification rate of the conjugated diene polymer composition according to the present embodiment is preferably 40% or more, more preferably 50% or more, still more preferably 60% or more from the viewpoint of the fuel efficiency.

To suppress uneven distribution of a filler such as silica in the compound product, the modification rate of the conjugated diene polymer (A) is preferably 40% or more, more preferably 50% or more, still more preferably 60% or more. Although not particularly limited, the upper limit of the modification rate of the conjugated diene polymer (A) is 99% or less, for example, from the viewpoint of the processability of the compound product.

Furthermore, to suppress uneven distribution of a filler such as silica in the compound product, the modification rate of the conjugated diene polymer (B) is preferably 40% or more, more preferably 50% or more, still more preferably 60% or more. Although not particularly limited, the upper limit of the modification rate of the conjugated diene polymer (B) is 99% or less, for example, from the viewpoint of processability of the compound product.

To enhance the fuel efficiency and the stability of the performance of the compound product, the modification rates of the conjugated diene polymer (A) and the conjugated diene polymer (B) contained in the conjugated diene polymer composition according to the present embodiment both are preferably 40% or more, more preferably 50% or more, still more preferably, 60% or more, particularly preferably 65% or more.

(Termination of reaction)

Anionic polymerization can be terminated by adding a reaction terminator usually used in this field. Examples of such a reaction terminator include, but not particularly limited to, polar solvents having an active proton, such as alcohols such as methanol, ethanol, and isopropanol, or acetic acid and mixed solutions thereof; or mixed solutions of these polar solvents with nonpolar solvents such as hexane and cyclohexane. It is sufficient that the amount of the reaction terminator to be added is usually the same molar amount as or an about 2-fold molar amount to that of the anionic polymerization initiator.

(Hydrogenation method)

If the conjugated diene polymer used in the present embodiment is prepared by hydrogenation, the method and reaction condition for hydrogenation is not particularly limited as long as the predetermined physical properties described above are obtained, and hydrogenation may be performed by a known method under a known condition. Usually, hydrogenation is performed at 20 to 150°C under a pressurized hydrogen of 0.1 to 10 MPa in the presence of a hydrogenation catalyst. Any hydrogenation rate can be selected by varying the amount of the hydrogenation catalyst, the hydrogen pressure during the hydrogenation reaction, and the reaction time.

As the hydrogenation catalyst, usually a compound containing any one of Groups 4 to 11 metals in the periodic table can be used. Specifically, the hydrogenation catalyst to be used can be a compound containing a Ti, V, Co, Ni, Zr, Ru, Rh, Pd, Hf, Re, or Pt atom, for example, although not particularly limited thereto. Examples of more specific hydrogenation catalysts include, but not particularly limited to, Ti, Zr, Hf, Co, Ni, Pd, Pt, Ru, Rh, and Re metallocene compounds; carrier-type heterogeneous catalysts including a metal such as Pd, Ni, Pt, Rh, or Ru carried on a carrier such as carbon, silica, alumina, or diatomite; homogeneous Ziegler catalysts including a combination of an organic salt or acetylacetone salt of a metal element such as Ni or Co with a reducing agent such as organic aluminum; organic metal compounds of Ru and Rh or complexes thereof; and fullerenes and carbon nanotubes having occluded hydrogen.

Among these, a metallocene compound containing one of Ti, Zr, Hf, Co, and Ni is preferred because it can catalyze the hydrogenation reaction in a homogeneous system in an inactive organic solvent. Furthermore, a metallocene compound containing one of Ti, Zr, and Hf is preferred. These hydrogenation catalysts can be used singly or in combinations of two or more thereof.

A preferred method of obtaining the conjugated diene polymer includes performing solution polymerization, performing a modification treatment using the resulting polymer solution as it is, and then feeding the polymer solution to the hydrogenation step as needed. The conjugated diene polymer is obtained by removing the solvent from the resulting polymer solution, and isolating the polymer, for example. Although not particularly limited, isolation of the polymer can be performed, for example, by a known solvent removal method such as steam stripping and drying operation such as a heat treatment using a dehydration extruder, a dry extruder, or a conveyor.

(Method of producing conjugated diene polymer composition)

The method of obtaining the conjugated diene polymer composition according to the present embodiment is not particularly limited as long as the properties described above are obtained. Examples thereof include a method of obtaining the conjugated diene compound by kneading the conjugated diene polymer (A), the conjugated diene polymer (B), and additional components optionally compounded using a kneader such as an open kneader (such as a roll) or an air-tight kneader (such as a Banbury mixer). Alternatively, the conjugated diene polymer composition can be obtained by blending (mixing) a polymer solution of the conjugated diene polymer (A) with that of the conjugated diene polymer (B), and then subjecting the resulting blend to a known solvent removal method and drying operation. In the case where the conjugated diene polymer composition is obtained by this method, appropriate compatibilization of the conjugated diene polymer (A) and the conjugated diene polymer (B) causes the conjugated diene polymer composition to appropriately foam when taken out from the dry extruder, thus increasing the specific surface area. As a result, the drying rate is increased compared to the case where the conjugated diene polymer (B) alone is used. For this reason, the conjugated diene polymer composition is preferred from the viewpoint of productivity.

In particular, the method of producing the conjugated diene polymer composition according to the present embodiment is preferably a method of:

examining a change in glass transition temperature according to the iodine value and a change in glass transition temperature according to the vinyl bond content and/or the aromatic vinyl monomer content in the conjugated diene polymer comprising a conjugated diene monomer and an aromatic vinyl monomer;

selecting a pair of the conjugated diene polymer (A) and the conjugated diene polymer (B) based on these changes such that the difference between the SP values (MPa$^{1/2}$) is 0 MPa$^{1/2}$ or more and 0.8 MPa$^{1/2}$ and the absolute value of the difference between the glass transition temperatures is 10°C or more and less than 80°C; and

mixing the selected conjugated diene polymer (A) and conjugated diene polymer (B) to obtain the conjugated diene polymer composition.

Examples of a specific method of selecting the conjugated diene polymer (A) and the conjugated diene polymer (B) include the above-described method of selecting the conjugated diene polymer (A) and the conjugated diene polymer (B).

(Pneumatic tire)

The pneumatic tire according to the present embodiment comprises the conjugated diene polymer composition, a plasticizer component, and a filler component.

The pneumatic tire according to the present embodiment can be produced using the rubber composition described later.

[Rubber composition]

The rubber composition used in the pneumatic tire according to the present embodiment comprises the conjugated diene polymers described above as rubber components. Other than the conjugated diene polymers above, rubber components generally used in standard rubber compound products for a tire can also be used. Examples of such rubber components include, but not particularly limited to, natural rubber (NR), isoprene rubber (IR), styrene butadiene rubber (SBR), and butadiene rubber (BR). These may be used singly or in combinations of two or more thereof.

The filler component is compounded with the rubber compound product in order to reinforce rubber. Specific examples of the filler component include, but not particularly limited to, white fillers (inorganic fillers) such as silica, calcium carbonate, mica, aluminum hydroxide, magnesium oxide, magnesium hydroxide, clay, talc, alumina, titanium oxide, and mica; and carbon black. These may be used singly or in combinations of two or more thereof. Among these, silica and carbon black are preferred, and a combination thereof is more preferred.

Examples of silica include, but not particularly limited to, dry process silica (anhydrous silica) and wet process silica (hydrous silica). Preferred is wet process silica because it has a large number of silanol groups.

The nitrogen adsorption specific surface area (N2SA) of silica is preferably 60 m$^2$/g or more, more preferably 120 m$^2$/g or more from the viewpoint of resistance to wear, and preferably 300 m$^2$/g or less, more preferably 200 m$^2$/g or less from the viewpoint of low fuel consumption.

The nitrogen adsorption specific surface area of silica is a value measured by a BET method according to ASTM D3037-81.

The content of silica is preferably 30 parts by mass or more, more preferably 50 parts by mass or more based on 100 parts by mass of the rubber components from the viewpoint of low fuel consumption, and preferably 120 parts by mass or less, more preferably 100 parts by mass or less based on 100 parts by mass of the rubber components from the viewpoint of the Mooney viscosity.

Examples of carbon black include, but not particularly limited to, furnace blacks (furnace carbon blacks) such as SAF, ISAF, HAF, MAF, FEF, SRF, GPF, APF, FF, CF, SCF, and ECF; acetylene black (acetylene carbon black); thermal blacks (thermal carbon blacks) such as FT and MT; channel blacks (channel carbon blacks) such as EPC, MPC, and CC; and graphite. These can be used singly or in combinations of two or more thereof.

The nitrogen adsorption specific surface area (N2SA) of carbon black is usually 5 to 200 m$^2$/g, preferably 50 m$^2$/g or more, more preferably 80 m$^2$/g or more from the viewpoint of resistance to wear, and preferably 150 m$^2$/g or less, more preferably 120 m$^2$/g or less from the viewpoint of low fuel consumption. The dibutyl phthalate (DBP) absorption amount of carbon black is usually 5 to 300 mL/100 g. The lower limit is preferably 80 mL/100 g, and the upper limit is preferably 180 mL/100 g. The nitrogen adsorption specific surface area is measured according to ASTM D4820-93, and the DBP absorption amount is measured according to ASTM D2414-93.

The content of carbon black is preferably 1 part by mass or more, more preferably 3 parts by mass or more based on 100 parts by mass of the rubber components from the viewpoint of resistance to wear, and preferably 30 parts by mass or less, more preferably 15 parts by mass or less based on 100 parts by mass of the rubber components from the viewpoint of low fuel consumption.

Preferably, silica is used in combination of a silane coupling agent. A known silane coupling agent in the related art can be used as the silane coupling agent. Specific examples of the silane coupling agent include, but not particularly limited to, sulfide silane coupling agents such as bis(3-triethoxysilylpropyl)tetrasulfide, bis(2-triethoxysilylethyl)tetrasulfide, bis(3-trimethoxysilylpropyl)tetrasulfide, bis(2-trimethoxysilyl ethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyltetrasulfide, 3-trimethoxysilylpropylbenzothiazolyltetrasulfide, 3-triethoxysilylpropylbenzothiazoletetrasulfide, 3-triethoxysilylpropyl methacrylate monosulfide, and 3-trimethoxysilylpropyl methacrylate monosulfide; mercaptosilane coupling agents such as 3-mercaptopropyltrimethoxysilane, 3-mercaptopropyltriethoxysilane, 2-mercaptoethyltrimethoxysilane, and 2-mercaptoethyltriethoxysilane; vinylsilane coupling agents such as vinyltriethoxysilane and vinyltrimethoxysilane; aminosilane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitrosilane coupling agents such as 3-nitropropyltrimethoxysilane and 3-nitropropyltriethoxysilane; and chlorosilane coupling agents such as 3-chloropropyltrimethoxysilane, 3-chloropropyltriethoxysilane, 2-chloroethyltrimethoxysilane, and 2-chloroethyltriethoxysilane. These silane coupling agents may be used singly or in combinations of two or more thereof. Among these, the sulfide silane coupling agents are preferred, and bis(3-triethoxysilylpropyl)tetrasulfide and bis(3-triethoxysilylpropyl)disulfide are more preferred from the viewpoint of the coupling effect provided by the silane coupling agent, processability, and cost.

The content of the silane coupling agent is preferably 3 parts by mass or more, more preferably 5 parts by mass or more based on 100 parts by mass of silica from the viewpoint of low fuel consumption and resistance to wear, and preferably 15 parts by mass or less, more preferably 10 parts by mass or less based on 100 parts by mass of silica from the viewpoint of the Mooney viscosity.

Examples of the plasticizer component include, but not particularly limited to, oil, resins, anti-aging agents, waxes, stearic acid, and vulcanization accelerators. These may be used singly or in combinations of two or more thereof.

Examples of the oil include, but not particularly limited to, aromatic mineral oils (viscosity gravity constant (V.G.C. value): 0.900 to 1.049), naphthene mineral oils (V.G.C. value: 0.850 to 0.899), and paraffin mineral oils (V.G.C. value: 0.790 to 0.849). The polycyclic aromatic content of the extender oil is preferably less than 3% by mass, more preferably less than 1% by mass. The polycyclic aromatic content is measured according to the 346/92 method of The British Petroleum Institute. The aromatic compound content (CA) of the extender oil is preferably 20% by mass or more. These extender oils may be used in combinations of two or more thereof.

The content of the oil is preferably 5 parts by mass or more, more preferably 10 parts by mass or more based on 100 parts by mass of the rubber components from the viewpoint of the Mooney viscosity, and preferably 50 parts by mass or less, more preferably 40 parts by mass or less based on 100 parts by mass of the rubber components from the viewpoint of low fuel consumption.

Examples of the resin include, but not particularly limited to, C5-based petroleum resins, C9-based petroleum resins, coumarone indene resins, indene resins, phenol resins, and copolymers of α-methylstyrene and/or styrene. These may be used singly or in combinations of two or more thereof. Among these, coumarone indene resins, phenol resins (particularly, terpene phenol resin), and copolymers of α-methylstyrene and/or styrene are preferred, and a copolymer of α-methyl styrene and styrene is more preferred.

The content of the resin is preferably 1 part by mass or more, more preferably 3 parts by mass or more based on 100 parts by mass of the rubber components from the viewpoint of the wet grip performance, and preferably 20 parts by mass or less, more preferably 10 parts by mass or less based on 100 parts by mass of the rubber components from the viewpoint of low fuel consumption.

Examples of the anti-aging agent include, but not particularly limited to, naphthylamine anti-aging agents such as phenyl-α-naphthylamine; diphenylamine anti-aging agents such as octylated diphenylamine and 4,4'-bis(α,α'-dimethylbenzyl)diphenylamine; p-phenylenediamine anti-aging agents such as N-phenyl-N'-isopropyl-p-phenylenediamine, N-(1,3-dimethylbutyl)-N'-phenyl-p-phenylenediamine, and N,N'-di-2-naphthyl-p-phenylenediamine; quinoline anti-aging agents such as polymerized products of 2,2,4-trimethyl-1,2-dihydroquinoline; monophenol anti-aging agents such as 2,6-di-t-butyl-4-methylphenol and styrenated phenol; and bis-, tris-, and polyphenol anti-aging agents such as tetrakis-[methylene-3-(3',5'-di-t-butyl-4'-hydroxyphenyl)propionate]methane. These may be used singly or in combinations of two or more thereof. Among these, p-phenylenediamine anti-aging agents are preferred, and N-phenyl-N'-isopropyl-p-phenylenediamine is more preferred. The content of the anti-aging agent is preferably 0.1 to 5 parts by mass, more preferably 0.2 to 4 parts by mass based on 100 parts by mass of the rubber components.

Examples of the wax include, but not particularly limited to, petroleum waxes such as paraffin waxes and microcrystalline waxes; natural waxes such as plant-derived waxes and animal-derived waxes; and synthetic waxes such as polymerized products of ethylene or propylene. These may be used singly or in combinations of two or more thereof. Among these, petroleum waxes are preferred, and paraffin waxes are more preferred. The content of the wax is preferably 0.1 to 5 parts by mass, more preferably 0.2 to 4 parts by mass based on 100 parts by mass of the rubber components.

As the stearic acid, those conventionally known can be used without limitation, and commercial products available from NOF CORPORATION, Kao Corporation, Wako Pure Chemical Industries, Ltd., and Chiba Fatty Acid Co., Ltd. These may be used singly or in combinations of two or more thereof. The content of stearic acid is preferably 0.1 to 5 parts by mass, more preferably 0.2 to 4 parts by mass based on 100 parts by mass of the rubber components.

Examples of the vulcanization accelerator include, but not particularly limited to, thiazole vulcanization accelerators such as 2-mercaptobenzothiazole, dibenzothiazyl disulfide, and N-cyclohexyl-2-benzothiazylsulfenamide; thiuram vulcanization accelerators such as tetramethylthiuram monosulfide and tetramethylthiuram disulfide; sulfenamide vulcanization accelerators such as N-cyclohexyl-2-benzothiazolesulfenamide, N-t-butyl-2-benzothiazolesulfenamide, N-oxyethylene-2-benzothiazolesulfenamide, N-oxyethylene-2-benzothiazolesulfenamide, and N,N'-diisopropyl-2-benzothiazolesulfenamide; and guanidine vulcanization accelerators such as diphenylguanidine, diorthotolylguanidine, and orthotolylbiguanidine. These may be used singly or in combinations of two or more thereof. Among these, sulfenamide vulcanization accelerators are preferred, and N-cyclohexyl-2-benzothiazolesulfenamide is more preferred because the effects of the present invention are more suitably obtained. Furthermore, a combination with a guanidine vulcanization accelerator is also preferred. The content of the vulcanization accelerator is preferably 0.1 to 5 parts by mass, more preferably 0.2 to 4 parts by mass based on 100 parts by mass of the rubber components.

As well as the components above, the rubber composition can also contain compounding agents conventionally used in the rubber industry, such as a vulcanizing agent such as sulfur; a vulcanization activator such as zinc oxide; an organic peroxide; a processing aid such as a lubricant; and an anti-aging agent.

Although not particularly limited, sulfur can be suitably used as a vulcanizing agent. The content of sulfur is preferably 0.5 to 5 parts by mass, more preferably 1 to 3 parts by mass based on 100 parts by mass of the rubber components. Thereby, the effects of the present invention are suitably obtained.

The rubber composition is produced by a standard method. In other words, the rubber composition can be produced by a method of kneading the components above with a Banbury mixer, a kneader, an open roll mill, or the like, and then vulcanizing the mixture.

The rubber composition can be used in tire members (such as a tread, a sidewall, a carcass, a belt, a bead, a clinch, and a chafer). Among these, the rubber composition is suitably used as a tread. A tread having a two-layered structure is composed of a surface layer (cap tread) and an inner surface layer (base tread).

A tread having a multi-layer structure can be produced by a method of laminating sheets of the rubber composition into a predetermined shape or by a method of placing the rubber composition into two or more extruders to be formed into two or more layers through the head outlets of the extruders.

The pneumatic tire according to the present embodiment is produced from the rubber composition by a standard method. In other words, the rubber composition prepared by compounding the rubber components and the variety of optionally compounding agents described above is processed and extruded according shapes of the respective tire members such as a tread in an unvulcanized stage, and molding the extruded product with other tire members on a tire molding machine by a standard method. Thus, an unvulcanized tire is formed. The unvulcanized tire is heated under pressure in a vulcanizing machine to obtain the pneumatic tire according to the present embodiment.

The pneumatic tire according to the present embodiment is suitably used as tires for passenger cars, tires for trucks and buses, tires for motorcycles, and race tires, and is suitably used as tires for passenger cars in particular.

Examples

The present embodiment will now be described by way of specific Examples and Comparative Examples, but Examples and Comparative Examples below should not be construed as limitations to the present embodiment.

A variety of physical properties in Examples and Comparative Examples were measured by the methods shown below.

(Weight average molecular weight (Mw) of conjugated diene polymer)

A chromatogram was obtained from measurement as follows using a gel permeation chromatograph (hereinafter, also referred to as "GPC") equipped with three coupled columns containing polystyrene gel as a filler, and the weight average molecular weight (Mw) of the conjugated diene polymer was determined based on the calibration curve obtained using a standard polystyrene.

The eluent used was tetrahydrofuran (hereinafter, also referred to as "THF") containing 5 mmol/L of triethylamine. The columns used were a guard column (trade name "TSKguardcolumn SuperH-H") available from Tosoh Corporation and columns (trade names "TSKgel SuperH5000", "TSKgel SuperH6000", and "TSKgel SuperH7000") available from Tosoh Corporation.

A differential refractive index (hereinafter, also referred to as "RI") detector (trade name "HLC8020" available from Tosoh Corporation) was used at an oven temperature of 40°C at a THF flow rate of 0.6 mL/min. 10 mg of a sample for measurement was dissolved in 20 mL of THF to prepare a solution for measurement, and 20 $\mu$L of the solution for measurement was injected into the GPC.

(Modification rate of conjugated diene polymer)

The modification rate of the conjugated diene polymer was measured by column adsorption GPC method as follows. The measurement was performed utilizing the properties such that the conjugated diene polymer modified with a nitrogen atom-containing functional group is adsorbed on the column.

Using the chromatograms obtained from measurement of a sample solution containing the conjugated diene polymer and an internal standard low molecular weight polystyrene with a polystyrene column and a silica column, the amount of the conjugated diene compound adsorbed onto the silica column was determined from the difference between the amount thereof adsorbed onto the polystyrene column and the amount thereof adsorbed onto the silica column to determine the modification rate of the conjugated diene polymer.

Specifically, the measurement and the determination were performed as follows.

Preparation of sample solution:

10 mg of the conjugated diene polymer and 5 mg of standard polystyrene were dissolved in 20 mL of THF to prepare a sample solution.

Conditions for GPC measurement using columns containing polystyrene gel as filler:

The chromatogram was obtained from the measurement using a GPC equipped with three coupled columns containing a polystyrene gel as a filler.

THF containing 5 mmol/L of triethylamine was used as an eluent, and 20 $\mu$L of the sample solution was injected into the GPC to perform measurement. The columns used were a guard column (trade name "TSKguardcolumn SuperH-H" available from Tosoh Corporation and columns (trade names "TSKgel SuperH5000", "TSKgel SuperH6000", and "TSKgel SuperH7000") available from Tosoh Corporation. The sample solution was measured at a column oven temperature of 40°C and a THF flow rate of 0.6 mL/min using an RI detector (HLC8020 available from Tosoh Corporation) to obtain the chromatogram.

Conditions for GPC measurement using silica column:

Using a trade name "HLC-8320GPC" available from Tosoh Corporation, THF was used as an eluent, and 50 $\mu$L of the sample solution was injected into the GPC. Measurement was performed at a column oven temperature of 40°C and a THF flow rate of 0.5 ml/min using an RI detector to obtain the chromatogram. The columns used were trade names "Zorbax PSM-1000S", "PSM-300S", and "PSM-60S" connected, and a guard column (trade name "DIOL 4.6 × 12.5 mm, 5 micron") was connected upstream of the columns.

Method of calculating modification rate:

From the following formula, the modification rate (%) was determined, where the total peak area of the chromatogram obtained from the measurement using the polystyrene column was defined as 100, the peak area of the sample was defined as P1, the peak area of the standard polystyrene was defined as P2, the total peak area of the chromatogram obtained from the measurement using the silica column was defined as 100, the peak area of the sample was defined as P3, and the peak area of the standard polystyrene was defined as P4.

$$\text{modification rate (\%)} = [1 - (P2 \times P3)/(P1 \times P4)] \times 100$$

where

$$P1 + P2 = P3 + P4 = 100.$$

(Glass transition temperatures of conjugated diene polymer and conjugated diene polymer composition, and peak tops derived from glass transition derived from conjugated diene polymer in differential curve obtained by differential scanning calorimetry (hereinafter, also referred to as "DSC"))

While the conjugated diene polymer or the conjugated diene polymer composition as a sample was being heated in a predetermined temperature range according to ISO22768:2006, the DSC curve was recorded. The peak top (inflection point) in the DSC differential curve was defined as a glass transition temperature, and the number of peak tops was counted.

For the conjugated diene polymer composition, two or more values were recorded if two or more peak tops were present in the DSC differential curve.

(Bonded styrene content (content of aromatic vinyl monomer units (% by mass)), 1,2-vinyl bond content (1,2-vinyl bond content (mol% in BD) in butadiene units), and ethylene structure content (% by mass) in conjugated diene polymer)

The conjugated diene polymer was used as a sample for $^1$H-NMR measurement to measure the bonded styrene content, the 1,2-vinyl bond content, and the ethylene structure content. Conditions for measurement are shown below.

(Conditions for measurement)

apparatus for measurement: JNM-LA400 (available from JEOL)
solvent: deuterochloroform
sample for measurement: conjugated diene polymer
sample concentration: 50 mg/mL
frequency in observation: 400 MHz
chemical shift reference: TMS (tetramethylsilane)
pulse delay: 2.904 seconds
the number of scans: 64 scans
pulse width: 45°
temperature for measurement: 26°C

(Styrene block content in conjugated diene polymer)

The styrene block content in the conjugated diene polymer was measured as follows.

A chain composed of 8 or more linked styrene structural units was defined as a styrene block to determine the styrene block content in the conjugated diene polymer as follows. From the 400 MHz $^1$H-NMR spectrum of the conjugated diene polymer obtained from measurement using deuterochloroform as a solvent, the proportion of the integrated value in the chemical shift range (X) was determined to determine the content of the styrene block contained in the conjugated diene polymer. (X) 8 or more chains of the aromatic vinyl compound: $6.00 \leq S < 6.68$

(Iodine value of conjugated diene polymer)

The iodine value of the conjugated diene polymer was calculated by the method according to "JIS K 0070:1992".

(SP value of conjugated diene polymer)

The molar volume and cohesive energy of the conjugated diene polymer was calculated by the Bicerano's method (literature: J. Bicerano, Prediction of Polymer Properties, 3rd, Marcel Dekker, 2002). At this time, the bonded styrene content, the 1,2-vinyl bond content, and the ethylene structure content measured by the above method and the butylene content, 1,4-cis bond content, and the 1,4-trans bond content calculated from these were used.

For the cohesive energy, the value calculated according to the Van Krevelen method was used.

In the next step, the SP value of the conjugated diene polymer was determined by the method described from the expressions 17.8 to 17.10 shown in p. 615 of Jozef. Bicerano: PREDICTION OF POLYMER PROPERTIES, Marcel Dekker, AMERICA (2002). To be noted, crystallinity or the micro phase separation structure of the block copolymer or the like was neglected.

(Preparation of hydrogenation catalyst)

In Examples and Comparative Examples described later, the hydrogenation catalyst used in preparation of the conjugated diene polymer was prepared by the following method.

One liter of cyclohexane dried and refined was placed into a reaction container purged with nitrogen, and 100 mmol of bis(η5-cyclopentadienyl)titanium dichloride was added. While the system was being sufficiently stirred, an n-hexane solution containing 200 mmol of trimethyl aluminum was added, followed by a reaction at room temperature for about 3 days to obtain a hydrogenation catalyst (TC-1).

(Polymerization example 1) Conjugated diene polymer S1

An autoclave (inner volume: 40 L) equipped with a stirrer and a jacket to allow control of the temperature was used as a reactor. An initial amount of 2,100 g of 1,3-butadiene, 780 g of styrene, 21,000 g of cyclohexane, and 30 mmol of tetrahydrofuran (THF) and 15.5 mmol of 2,2-bis(2-oxolanyl)propane (BOP) as polar substances, from which impurities were preliminarily removed, were placed into the reactor, and the reactor inner temperature was kept at 42°C.

As a polymerization initiator, 22.1 mmol of n-butyllithium was fed to the reactor.

After the start of a polymerization reaction, the inner temperature of the reactor started increasing due to heat generated by polymerization. After the conversion rate of the monomer in the reactor reached 99%, an additional portion of 120 g of 1,3-butadiene was added to perform a reaction.

The final inner temperature of the reactor reached 76°C. After 2 minutes from the time when the inner temperature of the reactor reached the reaction temperature peak, 4.4 mmol of 2,2-dimethoxy-1-(3-trimethoxysilylpropyl)-1-aza-2-silacyclopentane (Compound 1) as a coupling agent was added to the reactor, and a coupling reaction was performed for 20 minutes. 4.4 mmol of methanol as a reaction terminator was added to this polymer solution to prepare a conjugated diene polymer solution before hydrogenation.

12.6 g of n-octadecyl-3-(3,5-di-t-butyl-4-hydrooxyphenyl)-propionate (Antioxidant 1) and 3.0 g of 4,6-bis(octylthiomethyl)-o-cresol (Antioxidant 2) as an antioxidant were added to the resulting conjugated diene polymer solution. The solvent was removed, and the resulting product was dried to obtain a conjugated diene polymer (S1).

The conjugated diene polymer (S1) was analyzed by the methods above. The results of analysis are shown in Table 3.

(Polymerization example 2) Conjugated diene polymer S2

An autoclave (inner volume: 40 L) equipped with a stirrer and a jacket to allow control of the temperature was used as a reactor. An initial amount of 2,100 g of 1,3-butadiene, 780 g of styrene, 21,000 g of cyclohexane, and 30 mmol of tetrahydrofuran (THF) and 15.5 mmol of 2,2-bis(2-oxolanyl)propane as polar substances, from which impurities were preliminarily removed, were placed into the reactor, and the reactor inner temperature was kept at 42°C.

As a polymerization initiator, 22.1 mmol of n-butyllithium was fed to the reactor.

After the start of a polymerization reaction, the inner temperature of the reactor started increasing due to heat generated by polymerization. After the conversion rate of the monomer in the reactor reached 99%, an additional portion of 120 g of 1,3-butadiene was added to perform a reaction.

The final inner temperature of the reactor reached 76°C. After 2 minutes from the time when the inner temperature of the reactor reached the reaction temperature peak, 4.4 mmol of 2,2-dimethoxy-1-(3-trimethoxysilylpropyl)-1-aza-2-silacyclopentane (Compound 1) as a coupling agent was added to the reactor, and a coupling reaction was performed for 20 minutes. 4.4 mmol of methanol as a reaction terminator was added to this polymer solution to prepare a conjugated diene polymer solution before hydrogenation.

90 ppm (based on titanium) of the hydrogenation catalyst (TC-1) based on 100 parts by mass of the conjugated diene polymer was added to the conjugated diene polymer solution to perform a hydrogenation reaction at a hydrogen pressure of 0.85 MPa and an average temperature of 90°C until the reaction of predetermined hydrogen was completed. Subsequently, 12.6 g of n-octadecyl-3-(3,5-di-t-butyl-4-hydrooxyphenyl)-propionate (Antioxidant 1) and 3.0 g of 4,6-bis(octylthiomethyl)-o-cresol (Antioxidant 2) as antioxidants were added to the conjugated diene polymer solution. The solvent was removed, and the product was dried to obtain a conjugated diene polymer S2.

The conjugated diene polymer S2 was analyzed by the methods above. The results of analysis are shown in Table 3.

(Polymerization examples 4 and 7) Conjugated diene polymers T1 and U1

Conjugated diene polymers T1 and U1 were obtained by the same method as that in Polymerization example 1 except that the polymerization formula was varied as shown in Table 1. In Polymerization examples 4 and 7, 3-(4-methylpiperazin-1-yl)propyltriethoxysilane (Compound 2) was used as a coupling agent.

The conjugated diene polymers T1 and U1 were analyzed by the methods above. The results of analysis are shown in Table 3.

(Polymerization examples 3, 5, 6, 8, and 9) Conjugated diene polymers S3, T2, T3, U2, and U3

Conjugated diene polymers S3, T2, T3, U2, and U3 were obtained by the same method as that in Polymerization example 2 except that the polymerization formula was varied as shown in Table 1.

The conjugated diene polymers S3, T2, T3, U2, and U3 were analyzed by the methods above. The results of analysis are shown in Table 3.

(Polymerization examples 10, 14, 17, and 20) Conjugated diene polymers V1, W1, X1, and Y1

Conjugated diene polymers V1, W1, X1, and Y1 were obtained by the same method as that in Polymerization example 1 except that the polymerization formula was varied as shown in Table 2. In Polymerization example 14, silicon tetrachloride (Compound 3) was used as a coupling agent.

The conjugated diene polymers V1, W1, X1, and Y1 were analyzed by the methods above. The results of analysis are shown in Table 4.

(Polymerization examples 11, 12, 13, 15, 16, 18, 19, and 21) Conjugated diene polymers V2, V3, V4, W2, W3, X2, X3, and Y2

Conjugated diene polymers V2, V3, V4, W2, W3, X2, X3, and Y2 were obtained by the same method as that in Polymerization example 2 except that the polymerization formula was varied as shown in Table 2.

The conjugated diene polymers V2, V3, V4, W2, W3, X2, X3, and Y2 were analyzed by the methods above. The results of analysis are shown in Table 4.

[Table 1]

| | | Polymerization example 1 | Polymerization example 2 | Polymerization example 3 | Polymerization example 4 | Polymerization example 5 | Polymerization example 6 | Polymerization example 7 | Polymerization example 8 | Polymerization example 9 |
|---|---|---|---|---|---|---|---|---|---|---|
| Conjugated diene polymer | Type | S1 | S2 | S3 | T1 | T2 | T3 | U1 | U2 | U3 |
| Initial 1,3-butadiene | g | 2100 | 2100 | 2100 | 700 | 700 | 700 | 1000 | 1000 | 1000 |
| Styrene | g | 780 | 780 | 780 | 735 | 735 | 735 | 1200 | 1200 | 1200 |
| Cyclohexane | g | 21000 | 21000 | 21000 | 25200 | 25200 | 25200 | 21000 | 21000 | 21000 |
| THF | mmol | 30 | 30 | 30 | 30 | 30 | 30 | 30 | 30 | 30 |
| BOP | mmol | 15.5 | 15.5 | 15.5 | 2.6 | 2.6 | 2.6 | 9.4 | 9.4 | 9.4 |
| Starting temperature | °C | 42 | 42 | 42 | 55 | 55 | 55 | 46 | 46 | 46 |
| n-Butyllithium | mmol | 22.1 | 22.1 | 22.1 | 14.1 | 14.1 | 14.1 | 37.5 | 37.5 | 37.5 |
| Additional 1,3-butadiene | g | 120 | 120 | 120 | 665 | 665 | 665 | 800 | 800 | 800 |
| Final temperature | °C | 76 | 76 | 76 | 75 | 75 | 75 | 77 | 77 | 77 |
| Coupling agent | Type | Compound 1 | Compound 1 | Compound 1 | Compound 2 | Compound 2 | Compound 2 | Compound 2 | Compound 2 | Compound 2 |
| | mmol | 4.4 | 4.4 | 4.4 | 5.5 | 5.5 | 5.5 | 14.3 | 14.3 | 14.3 |
| Methanol | mmol | 4.4 | 4.4 | 4.4 | 2.8 | 2.8 | 2.8 | 9.3 | 9.3 | 9.3 |
| Amount of hydrogenation catalyst added | Type | - | TC-1 | TC-1 | - | TC-1 | TC-1 | - | TC-1 | TC-1 |
| | ppm | 0 | 90 | 90 | 0 | 90 | 90 | 0 | 90 | 90 |
| Antioxidant 1 | g | 12.6 | 12.6 | 12.6 | 8.8 | 8.8 | 8.8 | 12.6 | 12.6 | 12.6 |
| Antioxidant 2 | g | 3 | 3 | 3 | 2.1 | 2.1 | 2.1 | 3 | 3 | 3 |

[Table 2]

| | | Polymerization example 10 | Polymerization example 11 | Polymerization example 12 | Polymerization example 13 | Polymerization example 14 | Polymerization example 15 | Polymerization example 16 | Polymerization example 17 | Polymerization example 18 | Polymerization example 19 | Polymerization example 20 | Polymerization example 21 |
|---|---|---|---|---|---|---|---|---|---|---|---|---|---|
| Conjugated diene polymer | Type | V1 | V2 | V3 | V4 | W1 | W2 | W3 | X1 | X2 | X3 | Y1 | Y2 |
| Initial 1,3-butadiene | g | 2000 | 2000 | 2000 | 2000 | 3000 | 3000 | 3000 | 740 | 740 | 740 | 2140 | 2140 |
| Styrene | g | 300 | 300 | 300 | 300 | 0 | 0 | 0 | 1560 | 1560 | 1560 | 660 | 660 |
| Cyclohexane | g | 21000 | 21000 | 21000 | 21000 | 21000 | 21000 | 21000 | 21000 | 21000 | 21000 | 21000 | 21000 |
| THF | mmol | 30 | 30 | 30 | 30 | 30 | 30 | 30 | 30 | 30 | 30 | 30 | 30 |
| BOP | mmol | 3.3 | 3.3 | 3.3 | 3.3 | 4.6 | 4.6 | 4.6 | 4.1 | 4.1 | 4.1 | 9.9 | 9.9 |
| Starting temperature | °C | 41 | 41 | 41 | 41 | 40 | 40 | 40 | 52 | 52 | 52 | 44 | 44 |
| n-Butyllithium | mmol | 33.4 | 33.4 | 33.4 | 33.4 | 38.7 | 38.7 | 38.7 | 27.4 | 27.4 | 27.4 | 22.1 | 22.1 |
| Additional 1,3-butadiene | g | 700 | 700 | 700 | 700 | 0 | 0 | 0 | 700 | 700 | 700 | 200 | 200 |
| Final temperature | °C | 79 | 79 | 79 | 79 | 79 | 79 | 79 | 83 | 83 | 83 | 78 | 78 |
| Coupling agent | Type | Compound 1 | Compound 1 | Compound 1 | Compound 1 | Compound 3 | Compound 3 | Compound 3 | Compound 2 | Compound 2 | Compound 2 | Compound 1 | Compound 1 |
| | mmol | 6.7 | 6.7 | 6.7 | 6.7 | 7.7 | 7.7 | 7.7 | 9.6 | 9.6 | 9.6 | 4.4 | 4.4 |
| Methanol | mmol | 6.0 | 6.0 | 6.0 | 6.0 | 7.7 | 7.7 | 7.7 | 8.2 | 8.2 | 8.2 | 4.4 | 4.4 |
| Amount of hydrogenation catalyst added | mmol | - | TC-1 | TC-1 | TC-1 | - | TC-1 | TC-1 | - | TC-1 | TC-1 | - | TC-1 |
| | ppm | 0 | 90 | 90 | 90 | 0 | 90 | 90 | 0 | 90 | 90 | 0 | 90 |

EP 3 950 814 A1

(continued)

| Conjugated diene polymer | Type | Polymerization example 10 | Polymerization example 11 | Polymerization example 12 | Polymerization example 13 | Polymerization example 14 | Polymerization example 15 | Polymerization example 16 | Polymerization example 17 | Polymerization example 18 | Polymerization example 19 | Polymerization example 20 | Polymerization example 21 |
|---|---|---|---|---|---|---|---|---|---|---|---|---|---|
| | | V1 | V2 | V3 | V4 | W1 | W2 | W3 | X1 | X2 | X3 | Y1 | Y2 |
| Antioxidant 1 | g | 12.6 | 12.6 | 12.6 | 12.6 | 12.6 | 12.6 | 12.6 | 12.6 | 12.6 | 12.6 | 12.6 | 12.6 |
| Antioxidant 2 | g | 3 | 3 | 3 | 3 | 3 | 3 | 3 | 3 | 3 | 3 | 3 | 3 |

Compound 1, Compound 2, and Compound 3 in Tables 1 and 2 are shown below.

Compound 1: 2,2-dimethoxy-1-(3-trimethoxysilylpropyl)-1-aza-2-silacyclopentane
Compound 2: 3-(4-methylpiperazin-1-yl)propyltriethoxysilane
Compound 3: silicon tetrachloride

[Table 3]

| | | Polymerization example 1 | Polymerization example 2 | Polymerization example 3 | Polymerization example 4 | Polymerization example 5 | Polymerization example 6 | Polymerization example 7 | Polymerization example 8 | Polymerization example 9 |
|---|---|---|---|---|---|---|---|---|---|---|
| Conjugated diene polymer | Type | S1 | S2 | S3 | T1 | T2 | T3 | U1 | U2 | U3 |
| Bonded styrene | % by mass | 26 | 25.8 | 25.7 | 35 | 34.7 | 34.5 | 40 | 39.8 | 39.7 |
| 1,2-Vinyl bond | mol% in BD | 52 | 0.8 | 0.4 | 30 | 0.5 | 0.2 | 40 | 0.4 | 0.2 |
| Ethylene structure | % by mass | 0 | 20.8 | 30.5 | 0.0 | 29.4 | 39.3 | 0.0 | 22.3 | 31.4 |
| Styrene block | % by mass | 1.2 | 1.2 | 1.2 | 2.3 | 2.3 | 2.3 | 2.7 | 2.7 | 2.7 |
| Iodine value | I g/100 g | 348 | 70 | 24 | 306 | 76 | 31 | 282 | 65 | 23 |
| SP value | $MPa^{1/2}$ | 17.81 | 17.37 | 17.28 | 18.13 | 17.71 | 17.61 | 18.18 | 17.79 | 17.7 |
| Weight aver-age molecu-lar weight | unit: 10000 | 34 | 34 | 34 | 55 | 55 | 55 | 21 | 21 | 21 |
| Modification rate | % | 80 | 80 | 80 | 76 | 76 | 76 | 75 | 75 | 75 |
| Glass transi-tion tempera-ture | °C | -34.4 | -40.5 | -37.8 | -45.4 | -37.0 | -34.3 | -25.1 | -26.5 | -23.9 |

[Table 4]

| | | | Polymerization example 10 | Polymerization example 11 | Polymerization example 12 | Polymerization example 13 | Polymerization example 14 | Polymerization example 15 | Polymerization example 16 | Polymerization example 17 | Polymerization example 18 | Polymerization example 19 | Polymerization example 20 | Polymerization example 21 |
|---|---|---|---|---|---|---|---|---|---|---|---|---|---|---|
| Conjugated diene polymer | Type | | V1 | V2 | V3 | V4 | W1 | W2 | W3 | X1 | X2 | X3 | Y1 | Y2 |
| Bonded styrene | % by mass | | 10 | 9.7 | 9.5 | 9.4 | 0 | 0 | 0 | 52 | 51.9 | 51.9 | 22 | 21.8 |
| 1,2-Vinyl bond | mol% in BD | | 38 | 2.1 | 0.8 | 0.1 | 37 | 2.5 | 1.7 | 27 | 0.4 | 0.2 | 43 | 0.5 |
| Ethylene structure | % by mass | | 0.0 | 24.4 | 38.0 | 51.6 | 0.0 | 28.0 | 38.0 | 0.0 | 22.5 | 27.9 | 0 | 20.8 |
| Styrene block | % by mass | | 1.2 | 1.2 | 1.2 | 1.2 | 0.0 | 0.0 | 0.0 | 3.3 | 3.3 | 3.3 | 1.4 | 1.4 |
| Iodine value | g/100 g | | 423 | 148 | 84 | 21 | 470 | 165 | 118 | 188 | 38 | 15 | 367 | 73 |
| SP value | MPa[1/2] | | 17.59 | 17.12 | 17.03 | 16.92 | 17.4 | 16.94 | 16.85 | 18.49 | 18.13 | 18.07 | 17.80 | 17.32 |
| Weight average molecular weight | unit: 10000 | | 32 | 32 | 32 | 32 | 27 | 27 | 27 | 26 | 26 | 26 | 34 | 34 |
| Modification rate | % | | 82 | 82 | 82 | 82 | 0 | 0 | 0 | 70 | 70 | 70 | 80 | 80 |
| Glass transition temperature | °C | | -63.0 | -66.6 | -63.2 | -59.7 | -73.7 | -76.6 | -71.2 | -14.3 | -10.4 | -8.5 | -47.4 | -48.7 |

[Examples 1 to 20 and Comparative Examples 1 to 11]

The conjugated diene polymers shown in Tables 1 and 2 and obtained in Polymerization examples 1 to 21 were blended (mixed) at ratios shown in Tables 5 and 6 to prepare conjugated diene polymer compositions. For the conjugated diene polymers in Examples 1 to 20, the change in glass transition temperature caused by the 1,2-vinyl bond content and the bonded styrene content (aromatic vinyl monomer content) and the change in glass transition temperature caused by the iodine value shown in Tables 3 and 4 were examined, and pairs of the conjugated diene polymer (A) and the conjugated diene polymer (B) were selected based on these changes such that the difference between the SP values (MPa$^{1/2}$) was 0 MPa$^{1/2}$ or more and 0.8 MPa$^{1/2}$ and the absolute value of the difference between the glass transition temperatures was 10°C or more and less than 80°C. The physical properties of the resulting conjugated diene polymer compositions were measured by the methods above.

The blending (mixing) ratios in the conjugated diene polymer compositions and the physical properties of the conjugated diene polymer compositions are shown in Tables 5 and 6.

[Table 5]

| | | Comp. Ex. 1 | Ex. 1 | Ex. 2 | Ex. 3 | Ex. 4 | Ex. 5 | Comp. Ex. 2 | Comp. Ex. 3 | Comp. Ex. 4 | Ex. 6 | Ex. 7 | Comp. Ex. 5 | Ex. 8 |
|---|---|---|---|---|---|---|---|---|---|---|---|---|---|---|
| Conjugated diene polymer composition | Type | C1 | E1 | E2 | E3 | E4 | E5 | C2 | C3 | C4 | E6 | E7 | C5 | E8 |
| Conjugated diene polymer A | Type | S1 | S2 | S2 | S2 | S3 | S3 | S1 | V2 | S1 | S2 | S2 | S3 | S3 |
| | % by mass | 50 | 50 | 50 | 50 | 50 | 50 | 50 | 50 | 70 | 70 | 70 | 70 | 70 |
| Conjugated diene polymer B | Type | V1 | V2 | V3 | V4 | V3 | V4 | V4 | V3 | W1 | W2 | W3 | W2 | W3 |
| | % by mass | 50 | 50 | 50 | 50 | 50 | 50 | 50 | 50 | 30 | 30 | 30 | 30 | 30 |
| Difference in bonded styrene content | % by mass | 16 | 16.1 | 16.3 | 16.4 | 16.2 | 16.3 | 16.6 | 0.2 | 26 | 25.8 | 25.8 | 25.7 | 25.7 |
| Absolute value of difference in iodine value | I g/100 g | 75 | 78 | 14 | 49 | 60 | 3 | 327 | 64 | 122 | 95 | 48 | 141 | 94 |
| Difference between SP values | MPa$^{1/2}$ | 0.22 | 0.25 | 0.34 | 0.45 | 0.25 | 0.36 | 0.89 | 0.09 | 0.41 | 0.43 | 0.52 | 0.34 | 0.43 |
| Absolute value of difference between glass transition temperature of conjugated diene polymer (A) and that of conjugated diene polymer (B) | °C | 28.6 | 26.1 | 22.7 | 19.3 | 25.4 | 21.9 | 25.4 | 3.4 | 39.3 | 36.2 | 30.7 | 38.8 | 33.4 |
| The number of peak tops derived from glass transition derived from conjugated diene polymer in DSC differential curve of conjugated diene polymer composition | peak tops | 1 | 1 | 1 | 1 | 1 | 1 | 2 | 1 | 1 | 1 | 1 | 1 | 1 |
| Glass transition temperature of conjugated diene polymer composition | °C | -48.7 | -53.5 | -51.8 | -50.1 | -50.5 | -48.8 | -34.5 -60.2 | -64.9 | -46.2 | -51.3 | -49.7 | -49.5 | -47.8 |

[Table 6]

| | | Comp. Ex. 6 | Ex. 9 | Ex. 10 | Ex. 11 | Ex. 12 | Comp. Ex. 7 | Comp. Ex. 8 | Ex. 13 | Ex. 14 | Ex. 15 | Comp. Ex. 9 | Ex. 16 | Ex. 17 | Comp. Ex. 10 | Ex. 18 | Comp. Ex. 11 | Ex. 19 | Ex. 20 |
|---|---|---|---|---|---|---|---|---|---|---|---|---|---|---|---|---|---|---|---|
| Conjugated diene polymer composition | Type | C6 | E9 | E10 | E11 | E12 | C7 | C8 | E13 | E14 | E15 | C9 | E116 | E17 | C10 | E18 | C11 | E19 | E20 |
| Conjugated diene polymer A | Type | T1 | T2 | T2 | T3 | T3 | U1 | U2 | U2 | U3 | U3 | X1 | X2 | X3 | S1 | Y2 | Y1 | Y2 | Y2 |
| | % by mass | 50 | 50 | 50 | 50 | 50 | 30 | 30 | 30 | 30 | 30 | 30 | 30 | 30 | 50 | 50 | 70 | 70 | 85 |
| Conjugated diene polymer B | Type | V1 | V2 | V3 | V3 | V4 | V1 | V4 | V3 | V3 | V4 | T1 | T2 | T3 | Y1 | S3 | V1 | V3 | V3 |
| | % by mass | 50 | 50 | 50 | 50 | 50 | 70 | 70 | 70 | 70 | 70 | 70 | 70 | 70 | 50 | 50 | 30 | 30 | 15 |
| Difference in bonded styrene content | % by mass | 25 | 25 | 25.2 | 25 | 25.1 | 30 | 30.4 | 30.3 | 30.2 | 30.3 | 17 | 17.2 | 17.4 | 4 | 4 | 12 | 12.3 | 12.3 |
| Absolute value of difference in iodine value | I g/100 g | 117 | 72 | 8 | 53 | 10 | 141 | 44 | 19 | 61 | 2 | 118 | 38 | 16 | 19 | 49 | 56 | 11 | 11 |
| Difference between SP values | MPa$^{1/2}$ | 0.54 | 0.59 | 0.68 | 0.58 | 0.69 | 0.59 | 0.87 | 0.76 | 0.67 | 0.78 | 0.36 | 0.42 | 0.46 | 0.01 | 0.04 | 0.21 | 0.29 | 0.29 |
| Absolute value of difference in glass transition temperatures | °C | 17.6 | 29.6 | 26.2 | 28.9 | 25.5 | 37.9 | 33.2 | 36.7 | 39.3 | 35.9 | 31.1 | 26.6 | 25.8 | 13.0 | 10.9 | 15.6 | 14.5 | 14.5 |

EP 3 950 814 A1

28

| | | Comp. Ex. 6 | Ex. 9 | Ex. 10 | Ex. 11 | Ex. 12 | Comp. Ex. 7 | Comp. Ex. 8 | Ex. 13 | Ex. 14 | Ex. 15 | Comp. Ex. 9 | Ex. 16 | Ex. 17 | Comp. Ex. 10 | Ex. 18 | Comp. Ex. 11 | Ex. 19 | Ex. 20 |
|---|---|---|---|---|---|---|---|---|---|---|---|---|---|---|---|---|---|---|---|
| Conjugated diene polymer composition | Type | C6 | E9 | E10 | E11 | E12 | C7 | C8 | E13 | E14 | E15 | C9 | E116 | E17 | C10 | E18 | C11 | E19 | E20 |
| The number of peak tops derived from glass transition derived from conjugated diene polymer in DSC differential curve of conjugated diene polymer composition | peak tops | 1 | 1 | 1 | 1 | 1 | 1 | 2 | 2 | 2 | 2 | 1 | 1 | 1 | 1 | 1 | 1 | 1 | 1 |
| Glass transition temperature of conjugated diene polymer composition | °C | -54.2 | -51.8 | -50.1 | -48.7 | -47.0 | -51.3 | -26.0 -58.9 | -26.7 -63.0 | -24.2 -62.7 | -24.3 -59.0 | -36.0 | -29.0 | -26.5 | -40.9 | -43.3 | -52.8 | -53.1 | -50.9 |

EP 3 950 814 A1

[Examples 21 to 40 and Comparative Examples 12 to 22]

Using the conjugated diene polymer compositions prepared in Examples 1 to 20 and Comparative Examples 1 to 11 as raw material rubbers, rubber compound products containing the respective raw material rubbers were prepared by the kneading method under the compounding conditions described below. The properties of the resulting rubber compound products were measured by the following methods. The results of measurement are shown in Tables 7 and 8.

(Compounding conditions)

• raw material rubber (conjugated diene polymer compositions in Examples 1 to 20 and Comparative Examples 1 to 11): 100 parts by mass

The amounts of the compounding agents added were expressed in terms of parts by mass based on 100 parts by mass of the rubber components (conjugated diene polymer composition) not containing a softening agent for rubber.

- • silica 1 (trade name "Ultrasil 7000GR" available from Evonik Industries AG, nitrogen adsorption specific surface area: 170 m$^2$/g): 50.0 parts by mass
- • silica 2 (trade name "Zeosil Premium 200MP" available from Rhodia S.A., nitrogen adsorption specific surface area: 220 m$^2$/g): 25.0 parts by mass
- • carbon black (trade name "SEAST KH (N339)" available from Tokai Carbon Co., Ltd.): 5.0 parts by mass
- • silane coupling agent (trade name "Si75" available from Evonik Industries AG, bis(triethoxysilylpropyl)disulfide): 6.0 parts by mass
- • SRAE oil (trade name "process NC140" available from JXTG Nippon Oil & Energy Corporation): 25.0 parts by mass
- • zinc oxide: 2.5 parts by mass
- • stearic acid: 1.0 part by mass
- • anti-aging agent (N-(1,3-dimethylbutyl)-N'-phenyl-p-phenylenediamine): 2.0 parts by mass
- • sulfur: 2.2 parts by mass
- • vulcanization accelerator 1 (N-cyclohexyl-2-benzothiazylsulfenamide): 1.7 parts by mass
- • vulcanization accelerator 2 (diphenylguanidine): 2.0 parts by mass
- • total: 222.4 parts by mass

(Kneading method)

The materials above were kneaded by the following method to obtain a rubber compound product. Using an air-tight kneader (inner volume: 0.3 L) provided with a temperature control apparatus, as kneading at a first stage, the raw material rubber components (corresponding to each of the conjugated diene polymer compositions in Examples 1 to 20 and Comparative Examples 1 to 11), fillers (silica 1, silica 2, and carbon black), a silane coupling agent, SRAE oil, zinc oxide, and stearic acid were kneaded at a filling rate of 65% and the number of rotations of a rotor of 30 to 50 rpm. At this time, the temperature of the air-tight mixer was controlled to obtain a compound product at a discharge temperature of 155 to 160°C.

Next, as kneading at a second stage, the compound product obtained above was cooled to room temperature, and an anti-aging agent was added, followed by kneading again to disperse silicas well. Also in this case, the discharge temperature of the compound product was adjusted to 155 to 160°C by controlling the temperature of the mixer. After cooled, as kneading at a third stage, sulfur and vulcanization accelerators 1 and 2 were added, and the materials were kneaded with an open roll mill set at 70°C to prepare a rubber compound product. Subsequently, the resulting rubber compound product was molded, and was vulcanized at 160°C for 20 minutes with a vulcanization press. The properties of the rubber compound products (Examples 21 to 40, Comparative Examples 12 to 22) after vulcanization were evaluated. Specifically, the properties were evaluated by the following methods.

<Items for evaluation and test methods>

The resulting rubber compound products after vulcanization were evaluated for the following items. The results are shown in Tables 7 and 8 below.

(Fuel efficiency, wet grip performance)

Using a viscoelasticity tester "ARES" available from Rheometrix Scientific Inc., the viscoelasticity parameters of the rubber compound products after vulcanization were measured in a twist mode.

tanδ measured at 50°C, a frequency of 10 Hz, and a strain of 3% was defined as an index of fuel efficiency. A larger index value indicates higher fuel efficiency.

tanδ measured at 0°C, a frequency of 10 Hz, a strain of 1% was defined as an index of wet grip performance. A larger index value indicates higher wet grip performance.

For the rubber compound products after vulcanization in Examples 21 to 25 and Comparative Examples 13 and 14, the index values of the fuel efficiency and the wet grip performance were shown in Table 7 where the results of the fuel efficiency and the wet grip performance of the rubber compound product after vulcanization in Comparative Example 12 each were 100. For the rubber compound products after vulcanization in Examples 26 to 28 and Comparative Example 16, the index values of the fuel efficiency and the wet grip performance were shown in Table 7 where the results of the fuel efficiency and the wet grip performance of the rubber compound product after vulcanization in Comparative Example 15 each were 100. For the rubber compound products after vulcanization in Examples 29 to 32, the index values of the fuel efficiency and the wet grip performance were shown in Table 8 where the results of the fuel efficiency and the wet grip performance of the rubber compound product after vulcanization in Comparative Example 17 each were 100. For the rubber compound products after vulcanization in Examples 33 to 35 and Comparative Example 19, the index values of the fuel efficiency and the wet grip performance were shown in Table 8, where the results of the fuel efficiency and the wet grip performance of the rubber compound product after vulcanization in Comparative Example 18 each were 100. For the rubber compound products after vulcanization in Examples 36 and 37, the index values of the fuel efficiency and the wet grip performance were shown in Table 8 where the results of the fuel efficiency and the wet grip performance of the rubber compound product after vulcanization in Comparative Example 20 each were 100. For the rubber compound product after vulcanization in Example 38, the index values of the fuel efficiency and the wet grip performance were show in Table 8 where the results of the fuel efficiency and the wet grip performance of the rubber compound product after vulcanization in Comparative Example 21 each were 100. For the rubber compound products after vulcanization in Examples 39 and 40, the index values of the fuel efficiency and the wet grip performance were shown in Table 8 where the results of the fuel efficiency and the wet grip performance of the rubber compound product after vulcanization in Comparative Example 22 each were 100.

(Breaking properties)

The breaking strength and breaking elongation of each rubber compound product after vulcanization were measured according to the tensile test method specified in JIS K6251, and the product of the measured values was defined as breaking properties.

For the rubber compound products after vulcanization in Examples 21 to 25 and Comparative Examples 13 and 14, the index value of the breaking properties was shown in Table 7 where the result of the breaking properties of the rubber compound product after vulcanization in Comparative Example 12 was 100. For the rubber compound products after vulcanization in Examples 26 to 28 and Comparative Example 16, the index value of the breaking properties was shown in Table 7 where the result of those of the rubber compound product after vulcanization in Comparative Example 15 was 100. For the rubber compound products after vulcanization in Examples 29 to 32, the index value of the breaking properties was shown in Table 8 where the result of those of the rubber compound product after vulcanization in Comparative Example 17 was 100. For the rubber compound products after vulcanization in Examples 33 to 35 and Comparative Example 19, the index value of the breaking properties was shown in Table 8 where the result of those of the rubber compound product after vulcanization in Comparative Example 18 was 100. For the rubber compound products after vulcanization in Examples 36 and 37, the index value of the breaking properties was shown in Table 8 where the result of those of the rubber compound product after vulcanization in Comparative Example 20 was 100. For the rubber compound product after vulcanization in Example 38, the index value of the breaking properties was shown in Table 8 where the result of those of the rubber compound product after vulcanization in Comparative Example 21 was 100. For the rubber compound products after vulcanization in Examples 39 and 40, the index value of the breaking properties was shown in Table 8 where the result of those of the rubber compound product after vulcanization in Comparative Example 22 was 100.

(Change in breaking strength after heating)

Each rubber compound product after vulcanization was heated at 150°C for 5 hours under an atmosphere, and the breaking strength was measured by the same method as above to calculate a change amount in breaking strength before and after heating. In the evaluation, a smaller change amount indicates higher heat resistance and more endurable production.

Tables 7 and 8 show the evaluation of the change in breaking strength after heating, where the change amount of breaking strength before and after heating of 0 MPa or more and less than 1.0 MPa was ranked as ◎, that of 1.0 MPa or more and less than 2.5 MPa was ranked as ○, that of 2.5 MPa or more and less than 4.0 MPa was ranked as △, and

that of 4.0 MPa or more was ranked as ×. For practical use, the rubber compound product needs to have the rank △, ○, or ◎, and preferably has the rank ○ or ◎.

(Change in breaking properties for prolonged vulcanization time)

Each rubber compound product after vulcanization was prepared by the same method above except that only the vulcanization time was changed, in other words, vulcanization was performed at 160°C for 40 minutes using a vulcanization press.

The breaking properties of the resulting rubber compound product after vulcanization obtained under the above condition were measured by the same method as above to evaluate the difference in breaking properties from the corresponding rubber compound product after vulcanization prepared at 160°C for a vulcanization time of 20 minutes.

Tables 7 and 8 show the evaluation of the breaking properties of the rubber compound product vulcanized at 160°C for 40 minutes, where compared to the breaking properties of the corresponding rubber compound product vulcanized at 160°C for 20 minutes, a reduction of 20% or more was ranked as ×, a reduction of 10% or more and less than 20% was ranked as △, a reduction of 4% or more and less than 10% was ranked as ○, and a reduction of less than 4%, no reduction (the same), or an improvement was ranked as ◎.

A smaller reduction of the breaking properties for a prolonged vulcanization time indicates more stable physical properties of the rubber compound product. For practical use, the rubber compound product needs to have the rank △, ○, or ◎, and preferably has the rank ○ or ◎.

[Table 7]

| | | Comp. Ex. 12 | Ex. 21 | Ex. 22 | Ex. 23 | Ex. 24 | Ex. 25 | Comp. Ex. 13 | Comp. Ex. 14 | Comp. Ex. 15 | Ex. 26 | Ex. 27 | Comp. Ex. 16 | Ex. 28 |
|---|---|---|---|---|---|---|---|---|---|---|---|---|---|---|
| Conjugated diene polymer composition | Type | C1 | E1 | E2 | E3 | E4 | E5 | C2 | C3 | C4 | E6 | E7 | C5 | E8 |
| Fuel efficiency | Index | 100 | 115 | 111 | 107 | 105 | 103 | 95 | 110 | 100 | 109 | 107 | 104 | 103 |
| Wet grip performance | Index | 100 | 98 | 101 | 103 | 104 | 108 | 103 | 70 | 100 | 99 | 102 | 104 | 106 |
| Breaking properties | Index | 100 | 119 | 134 | 145 | 140 | 152 | 84 | 112 | 100 | 105 | 132 | 96 | 140 |
| Change in breaking strength after heating | Evaluation | × | Δ | ○ | ◎ | ◎ | ○ | Δ | Δ | × | ○ | ○ | ○ | ◎ |
| Change in breaking properties for prolonged vulcanization time | Evaluation | × | ○ | ◎ | ○ | ○ | ◎ | × | ○ | × | ○ | ○ | × | Δ |

[Table 8]

| Conjugated diene polymer composition | | Comp. Ex. 17 | Ex. 29 | Ex. 30 | Ex. 31 | Ex. 32 | Comp. Ex. 18 | Comp. Ex. 19 | Ex. 33 | Ex. 34 | Ex. 35 | Comp. Ex. 20 | Ex. 36 | Ex. 37 | Comp. Ex. 21 | Ex. 38 | Comp. Ex. 22 | Ex. 39 | Ex. 40 |
|---|---|---|---|---|---|---|---|---|---|---|---|---|---|---|---|---|---|---|---|
| Conjugated diene polymer composition | Type | C6 | E9 | E10 | E11 | E12 | C7 | C8 | E13 | E14 | E15 | C9 | E116 | E17 | C10 | E18 | C11 | E19 | E20 |
| Fuel efficiency | Index | 100 | 113 | 110 | 107 | 106 | 100 | 95 | 112 | 107 | 105 | 100 | 108 | 105 | 100 | 104 | 100 | 108 | 101 |
| Wet grip performance | Index | 100 | 97 | 102 | 105 | 108 | 100 | 97 | 100 | 108 | 110 | 100 | 104 | 106 | 100 | 100 | 100 | 102 | 109 |
| Breaking properties | Index | 100 | 122 | 145 | 142 | 165 | 100 | 120 | 139 | 148 | 163 | 100 | 127 | 143 | 100 | 119 | 100 | 132 | 130 |
| Change in breaking strength after heating | Evaluation | × | ○ | ○ | ◎ | ◎ | × | ○ | ○ | ○ | ◎ | × | ○ | ◎ | × | ○ | × | ○ | ○ |
| Change in breaking properties for prolonged vulcanization time | Evaluation | × | ○ | ◎ | ○ | ◎ | × | × | △ | ○ | △ | × | ○ | ◎ | × | ○ | × | ○ | △ |

As shown in Tables 7 and 8, it was revealed that compared to the rubber compound products (Comparative Examples 12 to 22) comprising the conjugated diene polymer compositions obtained in Comparative Examples 1 to 11, the rubber compound products (Examples 21 to 40) comprising the conjugated diene polymer compositions obtained in Examples 1 to 20, when vulcanized, demonstrated a better balance between the fuel efficiency and the wet grip performance, and had high breaking properties, a smaller change in breaking strength after heating, and a smaller change in breaking properties for a vulcanization time. From Examples, it was revealed that conjugated diene polymer compositions having a higher compounding freedom are provided.

Industrial Applicability

The conjugated diene polymer composition according to the present invention is industrially applicable as a material in applications to tire treads, automobile interior and exterior components, antivibration rubbers, belts, footwears, foams, and a variety of industrial products.

**Claims**

1. A conjugated diene polymer composition, comprising:

   a conjugated diene polymer (A) and a conjugated diene polymer (B),
   wherein the conjugated diene polymer (A) has an aromatic vinyl monomer unit content of 5% by mass or more and 60% by mass or less, and has an iodine value of 5 to 200 I g/100 g,
   the conjugated diene polymer (B) has an aromatic vinyl monomer unit content of 0% by mass or more and 50% by mass or less, and has an iodine value of 5 to 200 I g/100 g,
   the difference obtained by subtracting an SP value (MPa$^{1/2}$) of the conjugated diene polymer (B) from an SP value (MPa$^{1/2}$) of the conjugated diene polymer (A), (SP value of (A) - SP value of (B)), is 0 MPa$^{1/2}$ or more and 0.8 MPa$^{1/2}$ or less,
   the absolute value of the difference between the iodine value of the conjugated diene polymer (A) and that of the conjugated diene polymer (B), (|iodine value of (A) - iodine value of (B)|), is 100 I g/100 g or less, and
   the absolute value of the difference between the glass transition temperature of the conjugated diene polymer (A) and that of the conjugated diene polymer (B), (|glass transition temperature of (A) - glass transition temperature of (B)|), is 10°C or more and 60°C or less.

2. The conjugated diene polymer composition according to claim 1, wherein the conjugated diene polymer (A) has a weight average molecular weight of 230000 or more and less than 1000000.

3. The conjugated diene polymer composition according to claim 1 or 2, wherein the conjugated diene polymer (B) has a weight average molecular weight of 230000 or more and less than 1000000.

4. The conjugated diene polymer composition according to any one of claims 1 to 3, wherein a mass ratio of the conjugated diene polymer (A) to the conjugated diene polymer (B), (mass of (A):mass of (B)), is 20:80 to 80:20.

5. The conjugated diene polymer composition according to any one of claims 1 to 4, wherein a modification rate of the conjugated diene polymer (A) and that of the conjugated diene polymer (B) are 60% or more.

6. The conjugated diene polymer composition according to any one of claims 1 to 5, wherein the absolute value of the difference between the iodine value of the conjugated diene polymer (A) and that of the conjugated diene polymer (B), (|iodine value of (A) - iodine value of (B)|), is less than 80 I g/100 g.

7. The conjugated diene polymer composition according to any one of claims 1 to 6, wherein the difference between a content of an aromatic vinyl monomer unit contained in the conjugated diene polymer (A) and a content of an aromatic vinyl monomer unit contained in the conjugated diene polymer (B), (content of aromatic vinyl monomer unit contained in (A) - content of aromatic vinyl monomer unit contained in (B)), is 5% by mass or more and 30% by mass or less.

8. The conjugated diene polymer composition according to any one of claims 1 to 7, wherein one peak top derived from glass transition derived from the conjugated diene polymer is present in a DSC differential curve obtained by DSC measurement of the conjugated diene polymer composition.

9. The conjugated diene polymer composition according to any one of claims 1 to 8, wherein the glass transition temperature of the conjugated diene polymer composition measured by DSC is -65 to -15°C.

10. A pneumatic tire comprising the conjugated diene polymer composition according to any one of claims 1 to 9, a plasticizer component, and a filler component.

11. A method of producing a conjugated diene polymer composition, comprising:

examining, in a conjugated diene polymer comprising a conjugated diene monomer and an aromatic vinyl monomer,
a change in glass transition temperature caused by a vinyl bond content and/or the aromatic vinyl monomer content and
a change in glass transition temperature caused by an iodine value;
selecting a pair of a conjugated diene polymer (A) and a conjugated diene polymer (B) based on these changes such that the difference between an SP values ($MPa^{1/2}$) thereof is 0 $MPa^{1/2}$ or more and 0.8 $MPa^{1/2}$ and the absolute value of the difference between the glass transition temperatures thereof is 10°C or more and less than 80°C; and
mixing the conjugated diene polymer (A) and the conjugated diene polymer (B) which are selected.

Europäisches
Patentamt

European
Patent Office

Office européen
des brevets

# EUROPEAN SEARCH REPORT

Application Number

EP 21 19 0016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2019/117214 A1 (BRIDGESTONE CORP) 20 June 2019 (2019-06-20) * paragraph [0145] – paragraph [0157]; tables 1-4 * | 1-11 | INV. C08L9/06 B60C1/00 C08L15/00 C08C19/02 |
| A | EP 3 372 629 A1 (BRIDGESTONE CORP [JP]) 12 September 2018 (2018-09-12) * paragraph [0080]; claims 1-4,10 * | 1-11 | |
| A | US 2014/329930 A1 (SATO DAISUKE [JP]) 6 November 2014 (2014-11-06) * paragraph [0020] – paragraph [0033] * * paragraph [0157] – paragraph [0167] * | 1-11 | |
| A | US 2020/181369 A1 (YOSHIZAWA KENTARO [JP]) 11 June 2020 (2020-06-11) * paragraph [0009] – paragraph [0037] * * paragraph [0099] – paragraph [0119]; table 2 * | 1-11 | |
| T | EP 2 578 640 A2 (LG CHEMICAL LTD [KR]) 10 April 2013 (2013-04-10) * paragraph [0072] – paragraph [0075] * | 1-11 | TECHNICAL FIELDS SEARCHED (IPC) C08L B60C C08C |
| T | Polymerdatabase: "Prediction of Solubility Parameters A Comparison of four Group Contribution Methods", , 1 June 2015 (2015-06-01), XP055687364, Retrieved from the Internet: URL:http://polymerdatabase.com/pdf/crow_sol_par_June2015.pdf [retrieved on 2020-04-20] * the whole document * | 1-11 | |

The present search report has been drawn up for all claims

| Place of search | Date of completion of the search | Examiner |
|---|---|---|
| Munich | 17 December 2021 | Barker, Stephan |

## ANNEX TO THE EUROPEAN SEARCH REPORT
## ON EUROPEAN PATENT APPLICATION NO.

EP 21 19 0016

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2021

| Patent document cited in search report | | Publication date | Patent family member(s) | | Publication date |
|---|---|---|---|---|---|
| WO 2019117214 | A1 | 20-06-2019 | CN | 111492003 A | 04-08-2020 |
| | | | JP | WO2019117214 A1 | 03-12-2020 |
| | | | US | 2020307315 A1 | 01-10-2020 |
| | | | WO | 2019117214 A1 | 20-06-2019 |
| EP 3372629 | A1 | 12-09-2018 | CN | 108350184 A | 31-07-2018 |
| | | | EP | 3372629 A1 | 12-09-2018 |
| | | | JP | 6802179 B2 | 16-12-2020 |
| | | | JP | WO2017077713 A1 | 23-08-2018 |
| | | | US | 2018304685 A1 | 25-10-2018 |
| | | | WO | 2017077713 A1 | 11-05-2017 |
| US 2014329930 | A1 | 06-11-2014 | CN | 103987774 A | 13-08-2014 |
| | | | CN | 106916351 A | 04-07-2017 |
| | | | EP | 2787031 A1 | 08-10-2014 |
| | | | JP | 6050253 B2 | 21-12-2016 |
| | | | JP | WO2013099324 A1 | 30-04-2015 |
| | | | US | 2014329930 A1 | 06-11-2014 |
| | | | WO | 2013099324 A1 | 04-07-2013 |
| US 2020181369 | A1 | 11-06-2020 | CN | 109153824 A | 04-01-2019 |
| | | | EP | 3467020 A1 | 10-04-2019 |
| | | | JP | WO2017209261 A1 | 04-04-2019 |
| | | | US | 2020181369 A1 | 11-06-2020 |
| | | | WO | 2017209261 A1 | 07-12-2017 |
| EP 2578640 | A2 | 10-04-2013 | CN | 102918113 A | 06-02-2013 |
| | | | CN | 102918114 A | 06-02-2013 |
| | | | CN | 102918116 A | 06-02-2013 |
| | | | EP | 2578640 A2 | 10-04-2013 |
| | | | EP | 2578641 A2 | 10-04-2013 |
| | | | EP | 2578642 A2 | 10-04-2013 |
| | | | KR | 20110131079 A | 06-12-2011 |
| | | | KR | 20110131080 A | 06-12-2011 |
| | | | KR | 20110131081 A | 06-12-2011 |
| | | | US | 2013156969 A1 | 20-06-2013 |
| | | | US | 2013157056 A1 | 20-06-2013 |
| | | | US | 2013164485 A1 | 27-06-2013 |
| | | | US | 2015299450 A1 | 22-10-2015 |
| | | | WO | 2011149296 A2 | 01-12-2011 |
| | | | WO | 2011149297 A2 | 01-12-2011 |
| | | | WO | 2011149298 A2 | 01-12-2011 |

EPO FORM P0459

For more details about this annex : see Official Journal of the European Patent Office, No. 12/82

**REFERENCES CITED IN THE DESCRIPTION**

**Patent documents cited in the description**

- JP 6004081 B
- JP 6503064 B
- JP 2020045500 A

**Non-patent literature cited in the description**

- **J. BICERANO.** Prediction of Polymer Properties. Marcel Dekker, 2002
- **JOZEF. BICERANO.** PREDICTION OF POLYMER PROPERTIES. Marcel Dekker, 2002, 615